# EUROPÄISCHE PATENTSCHRIFT

(11) **EP 3 713 788 B1**
(45) Veröffentlichungstag und Bekanntmachung des Hinweises auf die Patenterteilung: **26.04.2023**
(21) Anmeldenummer: 18807069.2
(22) Anmeldetag: 20.11.2018
(51) Int. Cl.: B60N 2/56, A47C 7/74, B60H 1/00

(54) **KLIMATISIERUNGSSYSTEM EINES FAHRZEUGSITZES MIT KOMFORTOPTIMIERTER BETRIEBSWEISE DURCH BEDARFSGERECHTE UMSCHALTUNG DES SITZBELÜFTUNGSSYSTEMS**
AIR CONDITIONING SYSTEM OF A VEHICLE SEAT HAVING COMFORT-OPTIMIZED OPERATION BY MEANS OF APPROPRIATE SWITCHING OF THE SEAT VENTILATION SYSTEM
SYSTÈME DE CLIMATISATION D'UN SIÈGE DE VÉHICULE AYANT UN FONCTIONNEMENT OPTIMISÉ EN MATIÈRE DE CONFORT EN COMMUTANT LE SYSTÈME DE VENTILATION DU SIÈGE SELON LES BESOINS

(30) Priorität: 21.11.2017 DE 102017220770
(43) Veröffentlichungstag der Anmeldung: 30.09.2020
(73) Patentinhaber: Volkswagen Aktiengesellschaft, 38440 Wolfsburg (DE)
(72) Erfinder: BADER, Viktor, 38448 Wolfsburg (DE)
(86) Internationale Anmeldenummer: PCT/EP2018/081871
(87) Internationale Veröffentlichungsnummer: WO 2019/101718

(56) Entgegenhaltungen:
- EP-A1- 2 910 413
- CN-A- 105 059 158
- JP-A- 2006 076 398
- US-A1- 2013 232 996

## Beschreibung

Die Erfindung betrifft ein Klimatisierungssystem und ein Verfahren zur Klimatisierung eines Fahrzeugsitzes, der mindestens ein Sitzbelüftungssystem umfasst, wobei in einem Sitzteil und/oder einem Rückenlehnenteil des Fahrzeugsitzes mindestens ein Feuchte-Sensor als Feuchte-Istwertgeber für die absolute Luftfeuchte innerhalb des Polsterteils des mindestens einen Sitzteils und/oder Rückenlehnenteils angeordnet sind.

Bei sogenannten aktiv belüfteten Fahrzeugsitzen, bei welchen ein innerhalb des Polsters des Sitzes zirkulierender Luftstrom durch wenigstens einen Lüfter erzeugt wird, gibt es heute verschiedene Lüftungskonzepte.

Bei einem Lüftungskonzept, welches beispielsweise aus der Druckschrift DE 198 04 284 A1 als bekannt ist, werden Lüfter im Druckbetrieb betrieben. Ein Teil des Luftstroms wird dabei auch durch die Perforation des Sitzbezuges in Richtung der aufsitzenden Insassen gedrückt, um ein angenehmes Sitzklima zu schaffen. Neben diesen ausblasenden Systemen, bei welchen der jeweilige Lüfter im Druckbetrieb einen entsprechenden Luftstrom erzeugt, sind auch saugende Systeme bekannt, wie beispielsweise aus der Druckschrift DE 10 2006 005 343 A1 entnommen werden kann.

Außerdem ist aus der Druckschrift DE 10 2007 039 422 B4 ein Sitzbelüftungssystem bekannt, das mindestens einen Lüfter aufweist, der sowohl im Saugbetrieb als auch im Druckbetrieb zu betreiben ist. In einer ersten Phase der Sitzbelüftung wird der Sitz im Saugbetrieb und in einer zweiten Phase der Sitzbelüftung im Druckbetrieb betrieben, wobei sich der Umschaltzeitpunkt, in dem von der ersten zur zweiten Phase umgeschaltet wird, auf Erfahrungswerte stützt, sodass das Verfahren zum Betrieb des Sitzbelüftungssystems mittels einer zeitabhängigen Vorgabe des Umschaltzeitpunktes durchgeführt wird. In nachteiliger Weise werden bei diesem als nächstliegender Stand der Technik angesehenen Sitzbelüftungssystems somit ein aktueller und individueller Komfortzustand eines auf dem Fahrzeugsitz aufsitzenden Insassen nicht berücksichtigt.

Aus der Druckschrift DE 10 2014 206 613 A1 ist es bekannt, dass nur die gleichzeitige Messung von Hauttemperatur und Hautfeuchte direkt an einem Menschen die Möglichkeit ergibt, auf den individuellen thermischen Komfortzustand einer jeweiligen Person zu schließen.

Mithilfe einer Temperaturmessung kann zwar erkannt werden, dass der Zustand der Haut "zu kalt" vorliegt, es kann jedoch nicht zwischen den Zuständen "neutral" beziehungsweise "komfortabel" oder "zu warm" differenziert werden.

Bei einem Übergang von "neutral" beziehungsweise "komfortabel" zu "zu warm" versucht die Haut des Körpers der Person mithilfe von Feuchtigkeitsabgabe und Verdunstung der Feuchte über die Haut eine Wärmeabgabe zu erreichen. Die an der Oberfläche der Haut gemessene Kontakttemperatur der Haut bleibt durch den erläuterten Verdunstungseffekt der Haut annähernd gleich. Um die Komfortzustände erkennen zu können, muss somit ein anderer Weg gefunden werden. Hier setzt die nachfolgende Erfindung an, da aus dem Stand der Technik kein Sitzbelüftungssystem bekannt ist, welches in ausreichendem Maße den individuellen thermischen Komfortzustand einer jeweiligen Person berücksichtigt.

Der Erfindung liegt somit die Aufgabe zugrunde, ein Sitzbelüftungssystems und ein Verfahren zum Betrieb des Sitzbelüftungssystems zu schaffen, welches ein Polster eines Fahrzeugsitzes in einer Art und Weise belüftet, die einen individuellen thermischen Komfortzustand einer auf dem Polster des Fahrzeugsitzes aufsitzenden Person berücksichtigt.

Die Erfindung wird nachfolgend in Ausführungsbeispielen anhand der zugehörigen Zeichnungen erläutert. Es zeigen:
- Figur 1: ein erstes Diagramm der absoluten Feuchte, insbesondere eines Mischungsverhältnisses Wasserdampf/Luft über der Zeit zur Verdeutlichung eines Sättigungszeitpunktes, bei dem in einem Saugbetrieb im Wesentlichen keine Trocknung eines Kontaktbereichs im Vergleich zu einem Ausblasbetrieb mehr stattfindet;
- Figur 2: ein zweites Diagramm der absoluten Feuchte, insbesondere des Mischungsverhältnisses Wasserdampf/Luft über der Zeit zur Verdeutlichung der Verhältnisse bei unterschiedlichen Belüftungsstufen;
- Figur 3: ein drittes Diagramm der absoluten Feuchte, insbesondere des Mischungsverhältnisses Wasserdampf/Luft über der Zeit zur Verdeutlichung eines kurzzeitigen Anstiegs der absoluten Feuchte, nach einem Umschaltzeitpunkt vom Saugbetrieb in den Ausblasbetrieb;
- Figur 4: ein viertes Diagramm der absoluten Feuchte, insbesondere des Mischungsverhältnisses Wasserdampf/Luft über der Zeit zur Verdeutlichung eines kurzzeitigen Anstiegs der absoluten Feuchte, nach dem Umschaltzeitpunkt vom Saugbetrieb in den Ausblasbetrieb für ein Sitzteil und eine Rückenlehne;
- Figur 5: ein Diagramm der Temperatur über der Zeit zur Verdeutlichung eines effektiveren Kühleffektes des Ausblasbetriebs im Vergleich zu einem Saugbetrieb;
- Figur 6: ein erstes Flussdiagramm zu einer Regelstrategie;
- Figur 7: ein zweites Flussdiagramm zu einer Entscheidungsstrategie Saug- und/oder Ausblasbetrieb;
- Figur 8: ein Flussdiagramm zu der Entscheidungsstrategie Saug- und/oder Ausblasbetrieb gemäß Figur 7 in Abhängigkeit einer Wohlfühlkontaktfeuchte unter einem Feuchtigkeitsgrenzwert und einer Wohlfühlkontakttemperatur; und
- Figur 9: ein Flussdiagramm zu der Entscheidungsstrategie Saug- und/oder Ausblasbetrieb gemäß Figur 7 in Abhängigkeit einer Wohlfühlkontaktfeuchte oberhalb des Feuchtigkeitsgrenzwertes und der Wohlfühlkontakttemperatur.

Ausgangspunkt der Erfindung ist, dass die herkömmlichen Sitzbelüftungssysteme und die Verfahren zum Betrieb der Sitzbelüftungssysteme, bei denen die Fahrzeugsitze ausschließlich im Saugbetrieb oder im Ausblasbetrieb (= Druckbetrieb) betrieben werden, weniger vorteilhaft sind, wie in der Einleitung bereits näher erläutert ist.

Die bekannte Möglichkeit, ein Sitzbelüftungssystem eines Fahrzeugsitzes zwischen Saug- und Ausblasbetrieb umstellen zu können, bietet die in der Druckschrift DE 10 2007 039 422 B4 beschriebenen Vorteile, wobei die bekannte Betriebsweise erfindungsgemäß dahingehend verbessert wird, dass das Sitzbelüftungssystem nicht nur zeitabhängig eine Umschaltung zwischen Saug- und Ausblasbetrieb gewährleistet, sondern bedarfsgerecht aufgrund mindestens eines im Kontaktbereich gemessenen Komfortwertes zwischen aufsitzendem Insassen und Fahrzeugsitz ermöglicht, wie nachfolgend detailliert erläutert wird.

Wie in der Einleitung beschrieben, bleibt die Kontakttemperatur der Haut beim Übergang der Polstertemperatur in den Komfortzuständen von "neutral" zu "komfortabel = angenehm warm" zu "zu warm" annähernd gleich.

Um somit insbesondere die Komfortzustände erkennen zu können, wird erfindungsgemäß vorgeschlagen, zusätzlich die Feuchtigkeitsabgabe der Haut des aufsitzenden Insassen zu messen, da die Messung der Kontakttemperatur der Haut nicht ausreicht.

Die Grundidee besteht darin, dass die Ermittlung der Hauttemperatur und der Hautfeuchte als Komfortwerte, die in mindestens einem Kontaktbereich zwischen Haut und Polster gemessen werden, die Möglichkeit eröffnet, dass die Komfortwerte bestimmten Komfortzuständen der aufsitzenden Person zugeordnet werden können.

Über die Komfortwerte ist es dann erfindungsgemäß möglich, die Belüftung und/oder die Heizung des oder der Kontaktbereiche bedarfsgerecht für das Polster der Rückenlehne und das Polster des Sitzteils unabhängig voneinander vorzunehmen, insbesondere zu regeln.

Nachfolgend wird eine "komfortoptimierte Betriebsweise" des erfindungsgemäßen Sitzbelüftungssystems mit zugehöriger Sitzbelüftungsregelung und/oder der erfindungsgemäßen Sitzbeheizung mit zugehöriger Sitzbeheizungsregelung und die zugehörigen Randbedingungen detailliert beschrieben.

Als Randbedingung ist es bekannt, dass oberhalb einer "Feuchtigkeitsgrenze" der Haut in mindestens einem Kontaktbereich (Polster/Haut) des aufsitzenden Insassen von circa 13,5 g/kg der absoluten Feuchte der Haut, die auch als Kontaktfeuchte bezeichnet wird, insbesondere im Sommer von circa 12 g/kg absoluter Feuchte und im Winter von ca. 15 g/kg absoluter Feuchte ein unangenehm warmes Empfinden "zu warm" entsteht.

Bei der erfindungsgemäßen Sitzbelüftungsregelung wird in Abhängigkeit der absoluten Feuchte der Haut verhindert, dass eine vorgebbare Feuchtigkeitsgrenze, insbesondere 15 g/kg der absoluten Feuchte der Haut nicht überschritten wird.

Vorgesehen ist in einer Ausführungsvariante, dass vorausschauend bereits das Sitzbelüftungssystem sanft aktiviert wird, wenn erkannt wird, dass der aktuelle Feuchtigkeitsmesswert sich auf den Feuchtigkeitsmesswert der vorgebbaren Feuchtigkeitsgrenze, insbesondere auf eine maximale nicht zu überschreitende vorgebbare "Feuchtigkeitsgrenze", insbesondere 15 g/kg zu bewegt.

Zur Erfassung des Feuchtigkeitsmesswertes umfasst der Fahrzeugsitz mindestens einen Feuchtesensor, der im Polster des Sitzteils 12 und/oder der Rückenlehne 14 angeordnet ist.

Zudem ist vorgesehen, dass vorausschauend bereits eine Sitzheizung aktiviert wird, wenn vorausschauend erkannt wird, dass sich ein Temperaturmesswert auf eine vorgebbare Temperaturgrenze, insbesondere auf eine minimale nicht zu unterschreitende vorgebbare Temperaturgrenze zu bewegt. Dabei ist vorgesehen, dass die Kontakttemperatur einen Temperaturgrenzwert von insbesondere 31 °C nicht unterschreitet.

Zur Erfassung des Feuchtigkeitsmesswertes umfasst der Fahrzeugsitz mindestens einen Feuchtesensor, der im Polster des Sitzteils 12 und/oder der Rückenlehne 14 angeordnet ist.

Mittels eigener Messungen in Fahrzeugsitzen mit integrierten Feuchte- und Temperatursensoren wurde erkannt, dass neben der Überschreitung der Feuchtigkeitsgrenze von insbesondere 15 g/kg die vorgebbare Kontakttemperatur von insbesondere 31 °C nicht unterschritten werden sollte.

Diese genannten Messwerte und Grenzwerte, insbesondere der Feuchtemesswert mithin die Feuchtigkeitsgrenze (Kontaktfeuchte) und der Temperaturmesswert, mithin die Temperaturgrenze (Kontakttemperatur), werden innerhalb der Sitzbelüftungskomfortregelung in einem Fahrzeugsitz verwendet.

Es versteht sich, dass die genannten Messwerte von der Position der Sensoren im jeweiligen Polsterteil des Sitzteils 12 beziehungsweise der Rückenlehne 14 abhängen, insbesondere vom Abstand der Sensoren von den Kontaktoberfläche der Polsterteile.

Der im Kontaktbereich des aufsitzenden Insassen zum Polsterteil vorliegende Feuchtemesswert und/oder der im Kontaktbereich vorliegende Temperaturmesswert wird der Hauttemperatur des aufsitzenden Insassen beziehungsweise der Hautfeuchte des aufsitzenden Insassen zugeordnet, wobei ein entsprechender Korrekturwert berücksichtigt wird, der die Kleidung des Insassen berücksichtigt.

Zunächst wurden die Volumenströme Vₙ zur Ausbildung von mehreren (n = 1, 2, 3...) Belüftungsstufen SFₙ im Saug- und im Ausblasbetrieb aufeinander abgestimmt, um eine tatsächliche Vergleichbarkeit zwischen Saug- und Ausblasbetrieb zu gewährleisten.

Für die Feuchte- und Temperaturmessung in dem mindestens einen Kontaktbereich von Sitzteil 12 und/oder Rückenlehne 14, wurde zur Ermittlung des Feuchtigkeitsmesswertes und des Temperaturmesswertes ein den aufsitzenden Insassen repräsentierender beheizbarer und eine Flüssigkeit abgebender unbekleideter Sitzdummy verwendet, mittels dem ein homogenes und flächiges "Schwitzen" durch Vorgabe der Abgabe der Flüssigkeit unter Vorgabe einer Temperatur des Sitzdummys simuliert werden kann.

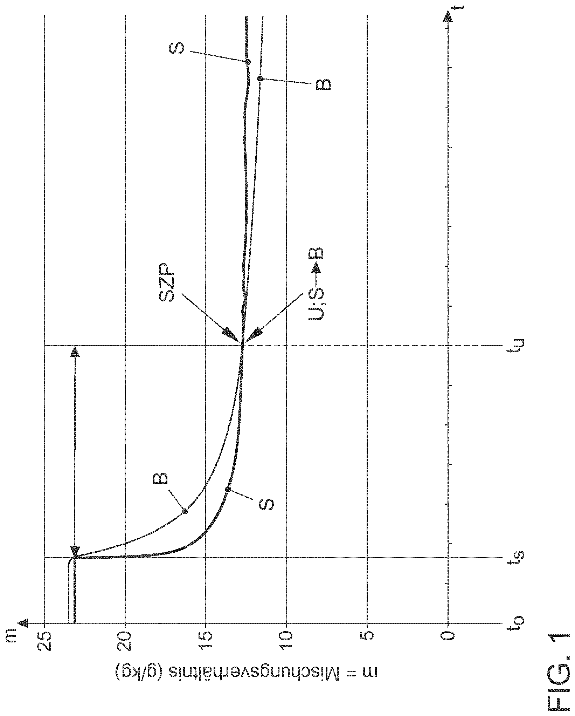

Es wurde erfindungsgemäß gefunden, wie Figur 1 zeigt, dass für die Trocknung des jeweiligen Kontaktbereichs, das heißt die Reduzierung der absoluten Feuchtigkeit zwischen Polster und Haut des aufsitzenden Insassen, zunächst der Saugbetrieb in den Polstern des Fahrzeugsitzes im Vergleich zum Ausblasbetrieb bei gleichem Luftdurchsatz effektiver ist.

Das Diagramm in Figur 1 zeigt ein Mischungsverhältnis m über der Zeit t der zu- oder abgeführten Luft, wobei m das Gewicht des Wasserdampfes in g, der in 1 kg trockener Luft enthalten ist.

Die Trocknung im Saugbetrieb gemäß Kennlinie S (gemittelte Kennlinie mehrerer Saugkennlinien eines Feuchtesensors im Polster eines Sitzteils und/oder einer Rückenlehne) geht von einem Startzeitpunkt tₛ, insbesondere nach einigen Minuten zum Zeitpunkt tu zu einem Sättigungszeitpunkt SZP in eine Art Sättigung über, wonach keine wesentliche Trocknung des Kontaktbereichs mehr stattfindet.

Definiert ist die absolute Feuchte durch die in einem bestimmten Luftvolumen enthaltene Wasserdampfmasse. Definiert ist ferner die maximale Luftfeuchtigkeit, die bei einer bestimmten Temperatur maximal mögliche absolute Luftfeuchtigkeit. Sie wird erreicht, wenn der Wasserdampfpartialdruck in der Luft so groß wie der Sättigungsdampfdruck des Wassers bei der entsprechenden Temperatur ist. Bei diesem Zustand beträgt die relative Luftfeuchtigkeit 100 %. Die relative Luftfeuchte ist kleiner als 100 %, wenn die Luft noch Wasserdampf aufnehmen kann.

Es zeigt sich ferner, dass der Ausblasbetrieb (Kennlinie B) nach dem Zeitpunkt t_{U}, insbesondere die Trocknung des mindestens einen Kontaktbereichs des jeweiligen Polsters des Fahrzeugsitzes weiter vorantreibt, während die Trocknung im Saugbetrieb stagniert, wie gemäß Figur 1 anhand des im Wesentlichen horizontalen Verlaufs der Kennlinie S über der Zeit t rechts vom Sättigungszeitpunkt SZP deutlich wird.

Das heißt, eine Umschaltung U; S---->B vom Saugbetrieb gemäß Kennlinie S zum Ausblasbetrieb zu einem Umschaltzeitpunkt tu gemäß Kennlinie B (gemittelte Kennlinie mehrerer Ausblaskennlinien eines Feuchtesensors im Polster eines Sitzteils und/oder einer Rückenlehne), insbesondere im Sättigungszeitpunkt SZP, verbessert somit nachweisbar die Trocknungswirkung des Kontaktbereichs des aufsitzenden Insassen gegenüber dem Polster.

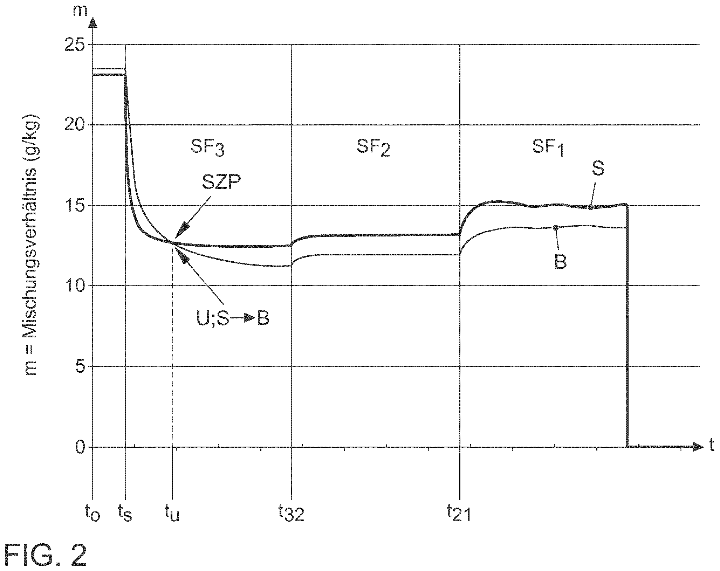

Gemäß Figur 2 gilt somit die Erkenntnis, dass eine Umschaltung U; S---->B im Umschaltzeitpunkt tu vom Saugbetrieb gemäß der gemittelten Kennlinie S zum Ausblasbetrieb gemäß gemittelten Kennlinie B, insbesondere im Sättigungszeitpunkt SZP die Trocknungswirkung im Kontaktbereich verbessert, im zeitlichen Verlauf auch dann, wenn eine Verringerung, insbesondere eine stufenweise Verringerung des Volumenstromes Vₙ in Lüfterstufen n = 3 vorgenommen wird.

Mit anderen Worten, die Trocknungswirkung ist auch dann im Ausblasbetrieb gemäß der gemittelten Kennlinie B gegenüber dem Saugbetrieb gemäß der gemittelten Kennlinie S wirksamer, wenn die Volumenströme Vₙ (V₃ > V₂ > V₁), wie in Figur 2 anhand der Belüftungsstufen SF₃, SF₂, SF, zu den Zeitpunkten t₃₂, t₂₁ verdeutlicht wird, heruntergefahren werden.

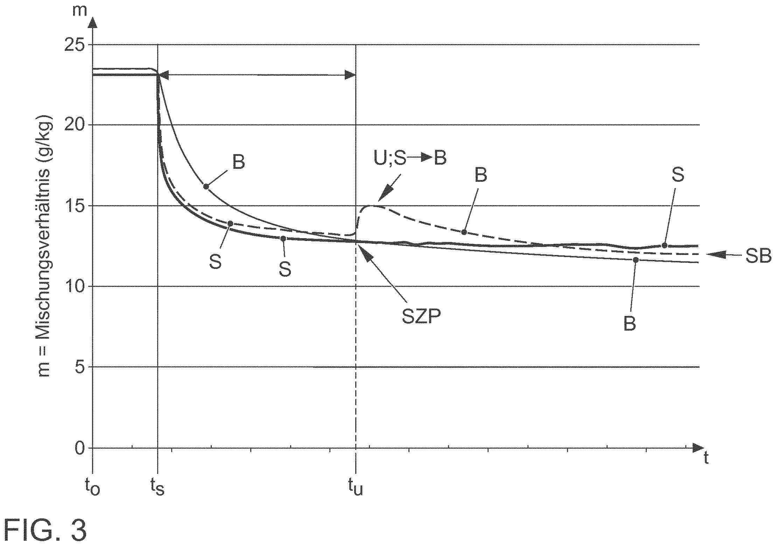

Es wurde auch festgestellt, dass es im Kontaktbereich nach der gemittelten Kennlinie SB gemäß der Figur 3 bei einer Umschaltung U; S---->B zum Umschaltzeitpunkt t_{U} vom Saugbetrieb gemäß Kennlinie S zum Ausblasbetrieb gemäß der gemittelten Kennlinie B, insbesondere im Sättigungszeitpunkt SZP zu einer kurzzeitigen Erhöhung der absoluten Feuchte kommt.

Ursache dafür ist, dass bereits eingesaugte feuchte Luft aus einem Kanalsystem im Polster des Fahrzeugsitzes, insbesondere aus dem Polster des Sitzteils 12 und/oder des Polsters der Rückenlehne 14 zum Kontaktbereich der aufsitzenden Person geleitet wird, wie am Sitzdummy und realen Personen ermittelt werden konnte.

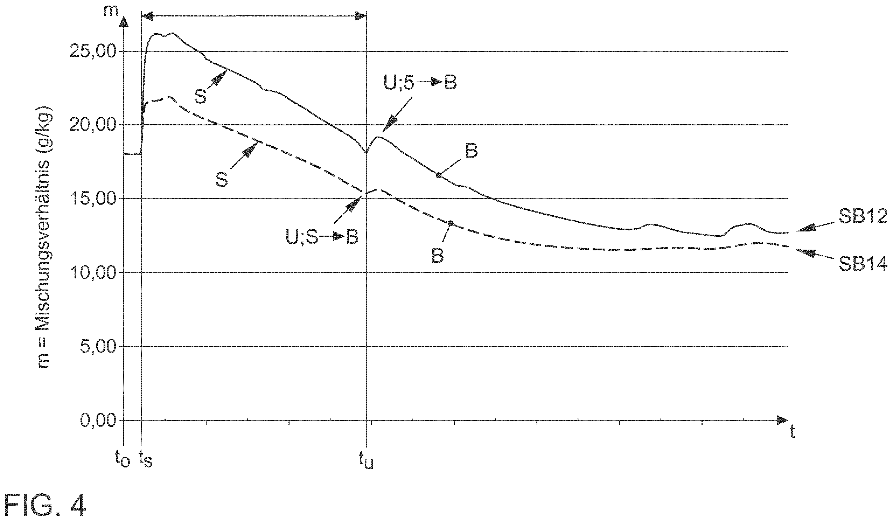

Gemäß Figur 4 ist das kurzzeitige Ansteigen der absoluten Feuchte nach dem Umschalten U; S-B vom Saugbetrieb S gemäß der spezifischen Kennlinie SB12, SB14 zum Ausblasbetrieb B beim Sitzdummy und auch bei realen Personen sowohl im Polster des Sitzteils 12 als auch im Polster der Rückenlehne 14 feststellbar, wie die Kennlinien SB12, SB14 spezifisch für das Sitzteil 12 und für die Rückenlehne 14 verdeutlichen.

Der kurzzeitige Anstieg der absoluten Feuchte wird von realen Probanden als unangenehm, insbesondere als "zu feucht" und/oder insbesondere als "zu warm" empfunden.

Als Zwischenergebnis ist somit festzustellen, dass eine Umschaltung U; S→B vom Saugbetrieb S gemäß den gemittelten und spezifischen Kennlinien SB12, SB14 zum Ausblasbetrieb B gemäß der gemittelten und spezifischen Kennlinien SB12, SB14 insbesondere bereits im Sättigungszeitpunkt SZP zum Umschaltzeitpunkt t_{U} eine sehr schnelle und effektivere Trocknung des Kontaktbereichs ermöglicht, jedoch der kurzzeitige Anstieg der absoluten Feuchte bei der Umschaltung U; S→B ungünstig auf das Wohlbefinden, mithin den Komfort des aufsitzenden Insassen wirkt.

Es wird erfindungsgemäß vorgeschlagen, dass eine Umschaltung U; S---->B vom Saugbetrieb gemäß den gemittelten und spezifischen Kennlinien SB12, SB14 zum Ausblasbetrieb B gemäß der gemittelten und spezifischen Kennlinien SB12, SB14, insbesondere im Sättigungszeitpunkt SZP im Umschaltzeitpunkt tu, der auch vor dem Sättigungszeitpunkt SZP liegen kann, derart vorgenommen wird, dass das kurzzeitige Ansteigen der absoluten Feuchte vom aufsitzenden Insassen nicht wahrgenommen wird.

Es wurde herausgefunden, dass eine Umschaltung U; S→B vom Saug- in den Ausblasbetrieb im Ausblasbetrieb B gemäß den gemittelten und spezifischen Kennlinien SB12 beziehungsweise SB14 gemäß Figur 4 zu einem spätesten Umschaltzeitpunkt tu durchgeführt wird, dem eine Regelgröße aufgeschaltet ist, die darin besteht, dass der kurzzeitige Anstieg der Feuchtigkeit bei der Umschaltung U; S---->B vom Saug- in den Ausblasbetrieb stets unterhalb der vorgebbaren Feuchtigkeitsgrenze bleibt.

Durch Erfassung des Feuchtigkeitsmesswertes in dem mindestens einen Kontaktbereich wird, um den spätesten Umschaltzeitpunkt tu zu ermitteln, dafür gesorgt, dass die vorgebbare Feuchtigkeitsgrenze im Saugbetrieb S, die beispielsweise als Mischungsverhältnis m = 15 g/kg vorgegeben ist, stets um den vorgebbaren negativen Offset von mindestens Δm 0,5 - 2,0 g/kg unterschritten wird, wie dazu durchgeführte Messungen ergeben haben.

Die Verwendung des negativen Offsets hat den Effekt, dass eine späteste Umschaltung U; S---->B zu einem spätesten Umschaltzeitpunkt tu vom Saugbetrieb gemäß den gemittelten und spezifischen Kennlinien SB12, SB14 zum Ausblasbetrieb B durch den vorgebbaren negativen Offset stets sichergestellt ist, dass der aufsitzende Insasse den kurzzeitigen Anstieg der absoluten Feuchte nach der Umschaltung zum Umschaltzeitpunkt tᵤ nicht bemerkt, da die vorgebbare Feuchtigkeitsgrenze, insbesondere die beispielhaft genannte Feuchtigkeitsgrenze von 15 g/kg im Ausblasbetrieb B durch den vorgegebenen negativen Offset nicht erreicht wird.

Mit anderen Worten, der Saugbetrieb S findet solange statt, dass die vorgebbare Feuchtigkeitsgrenze sozusagen von oben nach unten durchlaufen wird, wobei vorgesehen ist, dass der Saugbetrieb aufrechterhalten wird, bis der vorgebbare negative Offset von mindestens Δm 0,5 - 2,0 g/kg erreicht und eine Trocknung durch den Saugbetrieb S überhaupt noch gewährleistet ist.

Wird durch den Saugbetrieb S keine Trocknungswirkung in dem mindestens einen Kontaktbereich mehr erzielt, vergleiche Figuren 1 und 2, so erfolgt die Umschaltung U; S---->B vom Saugbetrieb gemäß Kennlinie SB12, SB14 zum Ausblasbetrieb gemäß Kennlinie SB12, SB14.

Der späteste Umschaltzeitpunkt t_{U} kann dabei mit dem Sättigungszeitpunkt SZP zusammenfallen oder vor dem Sättigungszeitpunkt SZP liegen. Da zum Sättigungszeitpunkt SZP, wie erläutert, die Trocknungswirkung im Saugbetrieb (vergleiche nochmals Figuren 1 und 2) des Kontaktbereichs nur noch geringe Wirkung erzielt, ist vorgesehen, dass der späteste Umschaltzeitpunkt tu nahe dem Sättigungszeitpunkt SZP liegt.

Es versteht sich, dass der jeweilige negative Offsetwert Δm von den Gegebenheiten des jeweiligen Fahrzeugsitzes unterschiedlicher Fahrzeugsitze, wegen unterschiedlicher Länge des Luftkanalsystems zwischen Lüfter und Belüftungsöffnungen sowie der Flüssigkeitsaufnahmefähigkeiten und/oder der Flüssigkeitsabgabefähigkeiten der jeweiligen Polster abhängt und somit für jeden Fahrzeugsitztyp separat experimentell festgestellt wird, weshalb der negative Offsetwert keine feste Größe ist, der für alle Fahrzeugsitze gilt.

Erfindungsgemäß ist weiter vorgesehen, eine vollautomatische Regelung der Sitzbelüftung unter Einbeziehung der Sitzheizungsregelung entsprechend der festgestellten Kontakttemperatur im Kontaktbereich zu gewährleisten.

Um eine Unterkühlung des aufsitzenden Insassen zu verhindern, wird im gleichen Kontaktbereich permanent neben dem Feuchtemesswert der absoluten Feuchte auch der Temperaturmesswert geregelt. Im gleichen Kontaktbereich liegt somit stets ein Feuchtemesswert und Temperaturmesswert vor.

Das jeweilige Polsterteil kann mehrere Kontaktbereiche aufweisen, denen jeweils ein Temperaturmesswert und Feuchtemesswert zugeordnet ist.

Dabei wird wie oben erläutert, der vollautomatischen Regelung als eine Regelgröße im Saugbetrieb S die vorgebbare Feuchtigkeitsgrenze als eine Regelgröße festgelegt, wobei die Regelung stets versucht, dafür zu sorgen, dass die Feuchtigkeitsgrenze um den negativen Offset Δm unterschritten wird.

Außerdem wird, wie oben bereits erläutert, der vollautomatischen Regelung als eine weitere Regelgröße im Saugbetrieb S und Ausblasbetrieb S, die vorgebbare Kontakttemperatur als Temperaturgrenze festgelegt, sodass die Regelung stets versucht, dafür zu sorgen, dass die Temperaturgrenze nicht unterschritten wird.

Bevorzugt wird als nicht zu unterschreitende Temperaturgrenze die Temperatur von insbesondere 31 °C als Temperaturgrenzwert festgelegt, der auch als sogenannte Wohlfühlkontakttemperatur angesehen und bezeichnet wird.

Bevorzugt wird als nicht zu überschreitende Feuchtigkeitsgrenze die absolute Feuchte von insbesondere m = 15 g/kg als Feuchtigkeitsgrenzwert festgelegt, der als sogenannte Wohlfühlkontaktfeuchte angesehen und bezeichnet wird.

Vorgeschlagen wird eine vollautomatische Regelung des Sitzbelüftungssystems unter Einbeziehung der vollautomatischen Sitzheizungsregelung entsprechend der festgestellten Kontakttemperatur, wobei eine Unterkühlung des aufsitzenden Insassen stets verhindert wird.

Es wird dementsprechend permanent die Wohlfühlkontaktfeuchte mithin der Feuchtigkeitsgrenzwert und die Wohlfühlkontakttemperatur mithin der Temperaturgrenzwert überwacht und darauf ausgeregelt, wobei die Wohlfühlkontaktfeuchte, wie erläutert, stets unter der vorgebbaren Feuchtigkeitsgrenze mit dem Mischungsverhältnis m = 15 g/kg als Feuchtigkeitsgrenzwert gehalten wird.

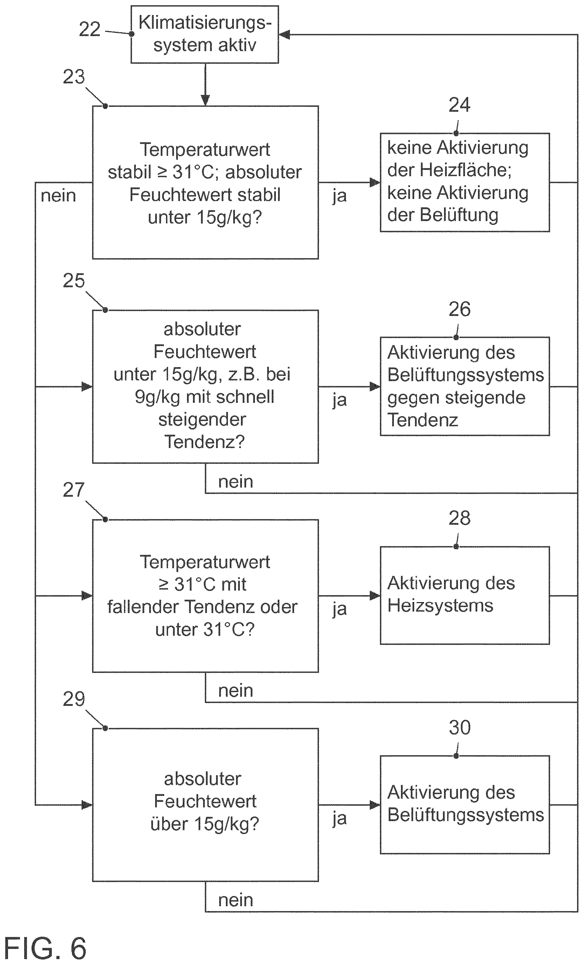

Regelstrategie in einem Basis-Betriebsmodus:
Gemäß Figur 6 erfolgt die Regelung erfindungsgemäß nach einer Regelstrategie, die in einem Flussdiagramm angegeben ist.

Gemäß dem Statusrechteck 22 ist die Regelung eines Klimatisierungssystems, umfassend eine Sitzbelüftungssystem und eine Sitzheizung aktiv und die Funktionen können entsprechend der Entscheidungsrechtecke 23, 25, 27, 29 in einen eingeschalteten oder ausgeschalteten Status versetzt (geschaltet) werden. Sitzteil 12 und/oder Rückenlehne 14 sind entsprechend mit dem Sitzbelüftungssystem und einer Sitzheizung ausgestattet.

Wird entsprechend einem ersten Entscheidungsrechteck 23 mittels dem polsterseitigen Temperatursensor im jeweiligen Kontaktbereich ein stabiler Temperaturmesswert von größer oder gleich 31 °C und mittels dem polsterseitigen Feuchtesensor ein stabiler absoluter Feuchtemesswert unter dem absoluten Feuchtegrenzwert von 15 g/kg festgestellt, liegen in dem/den Kontaktbereich/en optimale Bedingungen vor, sodass gemäß Statusrechteck 24 keine Aktivierung einer Heizfläche der Sitzheizung und keine Aktivierung des Sitzbelüftungssystems erfolgt. Dieser erstrebenswerte Zustand kann als Ziel-Komfortzustand mit den folgenden Regelstrategien im Vorfeld bereits eingeregelt worden sein.

Wird dabei entsprechend einem dem Entscheidungsrechteck 23 nachfolgenden Entscheidungsrechteck 25 ein absoluter Feuchtemesswert relativ weit unter 12 g/kg, zum Beispiel bei 9g/kg, mit schnell steigender Tendenz festgestellt, wird gemäß einem Statusrechteck 26 das Sitzbelüftungssystem für eine Regelung gegen diese steigende Tendenz mit einem Stellsignal eingeschaltet, um ein Überschwingen des Feuchtemesswertes über den Feuchtegrenzwert von 15 g/kg zu verhindern, wobei regelungsseitig zudem ein Temperaturmesswert von zirka 31 °C als Temperaturgrenzwert eingehalten wird.

Liegt bei einem dem Entscheidungsrechteck 23 ebenfalls nachfolgenden Entscheidungsrechteck 27 ein Temperaturmesswert größer oder gleich dem Temperaturgrenzwert 31 °C oder mit fallender Tendenz oder ein Temperaturmesswert unter 31 °C vor, wird gemäß einem Statusrechteck 28 die Heizfläche der Sitzheizung für eine Regelung der Temperatur auf den Temperaturgrenzwert von 31 °C mit einem Stellsignal zugeschaltet.

Wird weiter bei einem dem Entscheidungsrechteck 23 ebenfalls nachfolgenden Entscheidungsrechteck 29 ein absoluter Feuchtemesswert über 15 g/kg als Feuchtigkeitsgrenzwert festgestellt, wird gemäß einem Statusrechteck 30 das Sitzbelüftungssystem für eine Verringerung des absoluten Feuchtewertes unter den Feuchtigkeitsgrenzwert von 15 g/kg mit einem Stellsignal zugeschaltet.

Gemäß den Statusrechtecken 26 und 30 kommt es somit zur Zuschaltung des Sitzbelüftungssystems, wobei auch das Sitzheizungssystem gemäß dem Statusrechteck 28 zugeschaltet wird, wenn die erläuterten Bedingungen erfüllt sind.

Die Belüftung und Beheizung der Polsterteile des Sitzteils 12 und/oder der Rückenlehne 14 des Fahrzeugsitzes erfolgt somit mittels dem Sitzbelüftungssystem und der Sitzheizung.

In den Polsterteilen des Fahrzeugsitzes sind regelbare Heizorgane angeordnet. Anders gesagt weist das Sitzteil 12 und/oder die Rückenlehne 14 eine Sitzheizung beziehungsweise ein Sitzheizungssystem auf.

Das Belüftungssystem umfasst mindestens einen Lüfter, der über Belüftungsöffnungen im jeweiligen Polsterteil saugend oder ausblasend Luft aus dem Innenraum des Fahrzeuges über das jeweilige Polsterteil des Fahrzeugsitzes in den Innenraum des Fahrzeuges fördert.

Das jeweilige Polsterteil weist wenigstens einen Temperatursensor als Temperatur-Istwertgeber für die Temperatur innerhalb des Polsterteils und wenigstens ein Feuchtesensor als Feuchte-Istwertgeber für die absolute Luftfeuchte innerhalb des Polsterteils auf.

Dadurch können die thermischen Zustandsbedingungen für den mindestens einen Kontaktbereich eines Polsterteils mit einer Regeleinrichtung mit dem Heizsystem und/oder mit dem Belüftungssystem mit einem die erfassten Temperatur-Istwerte und Feuchte-Istwerte auswertenden Regelalgorithmus durch Variation der Luftströmung und/oder der Heizleistung als Zielvorgabe für einen thermischen Komfortzustand auf einen vorgebbaren Soll-Temperaturmesswert, gegebenenfalls einen einstellbaren Soll-Temperaturgrenzbereich zwischen 29 °C und 33 °C, vorzugsweise von 31 °C, und auf einen absoluten Soll-Feuchtemesswert zwischen 12 /kg und 15 g/kg vorzugsweise unterhalb und kleiner eines absoluten Soll- Feuchtegrenzwertes, gegebenenfalls eines vorgebbaren absoluten Soll-Feuchtegrenzwertes von 15 g/kg geregelt werden.

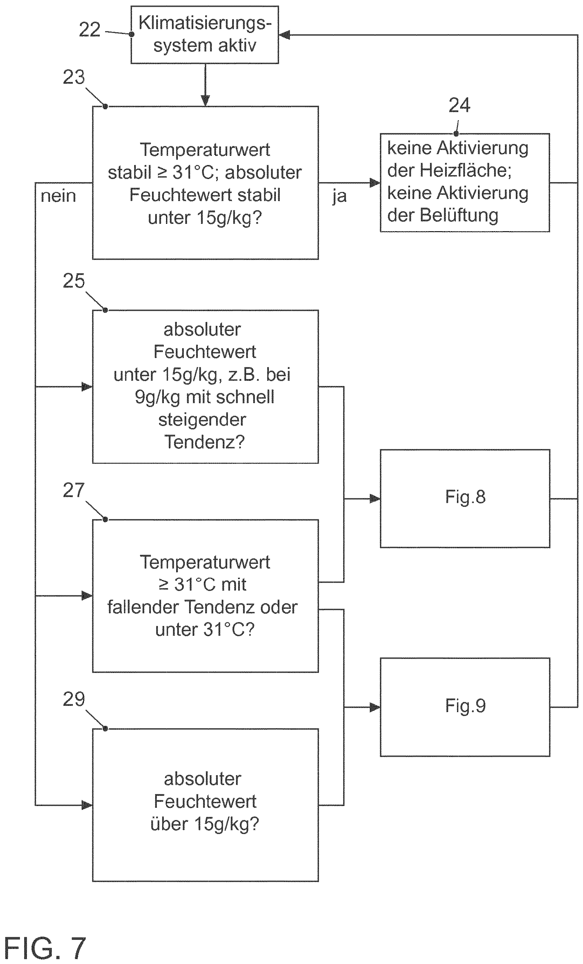

Gemäß den Statusrechtecken 26, 30 kommt es somit zur Zuschaltung des Sitzbelüftungssystems und gemäß dem Statusrechteck 28 gegebenenfalls auch zur Zuschaltung des Sitzheizungssystems, wobei im Automatikbetrieb der Regelung jeweils eine "erweiterte komfortoptimierte Betriebsweise" vorgeschlagen wird, die anhand der Figuren 7, 8 und 9 erläutert wird.

Regelstrategie in der erweiterten komfortoptimierten Betriebsweise:
In Figur 7 wird anhand eines Entscheidungs-Flussdiagramms erläutert, ob bei einer Aktivschaltung des Sitzbelüftungssystems zunächst der Saugbetrieb S oder der Ausblasbetrieb B zugeschaltet werden soll.

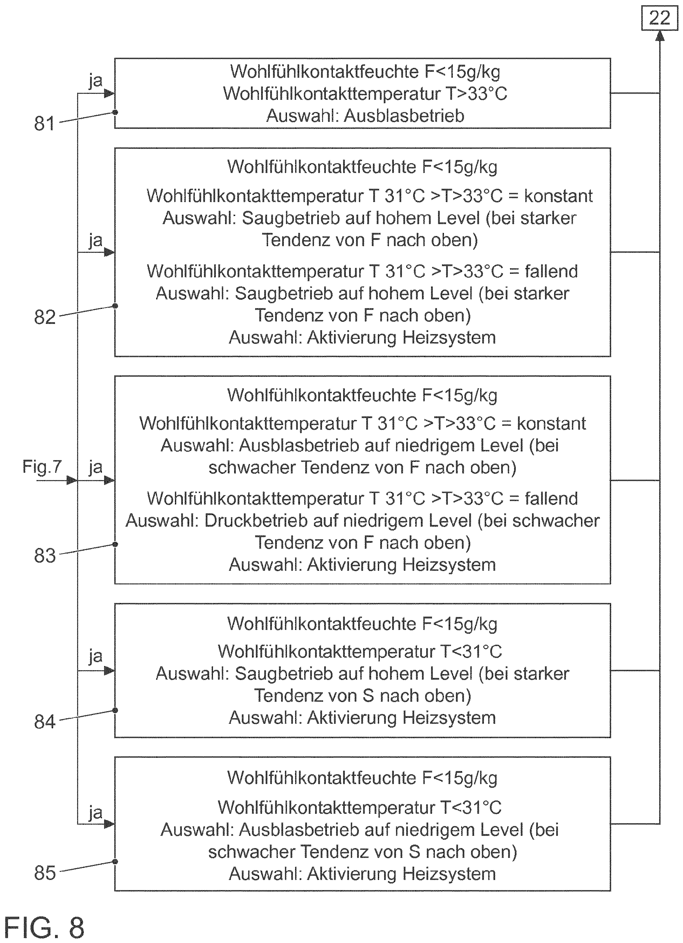

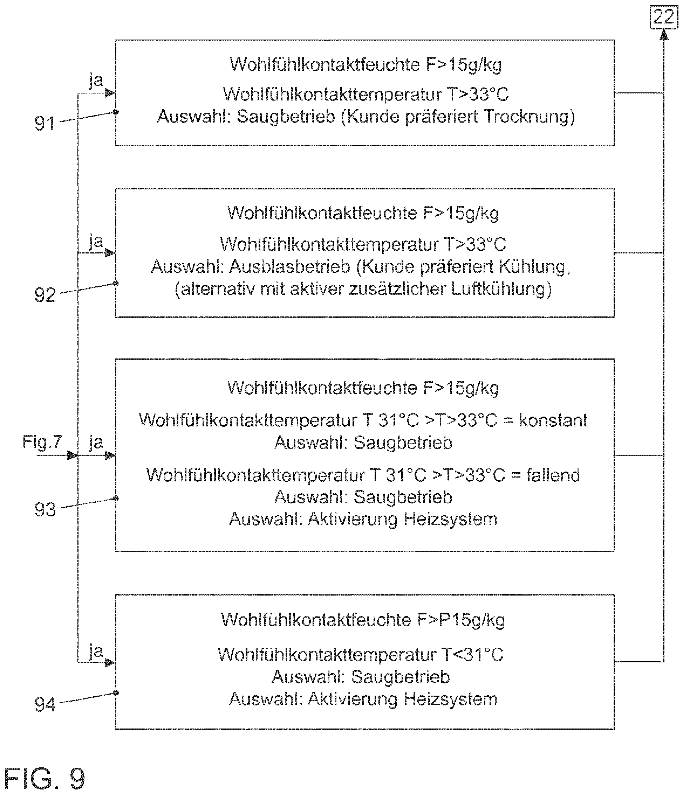

Zur Erläuterung dient das übergeordnete Regelstrategie-Flussdiagramm gemäß Figur 7, welches (vergleiche Figur 6) gegenüber der Figur 6 dahingehend erweitert ist, dass die in den Figuren 8 und 9 dargestellten Status- und Auswahlrechtecke 81 bis 85 und 91 bis 94 den Feuchtigkeitsgrenzwert und den Temperaturgrenzwert und ein tendenzielles Feuchte- und Temperaturverhalten sowie die Aktivschaltung des Sitzbelüftungssystems im Saugbetrieb S oder im Ausblasbetrieb B berücksichtigen, wie nachfolgend erläutert wird.

Nachfolgende Effekte werden dabei berücksichtigt, um den Komfort des aufsitzenden Insassen zu verbessern.

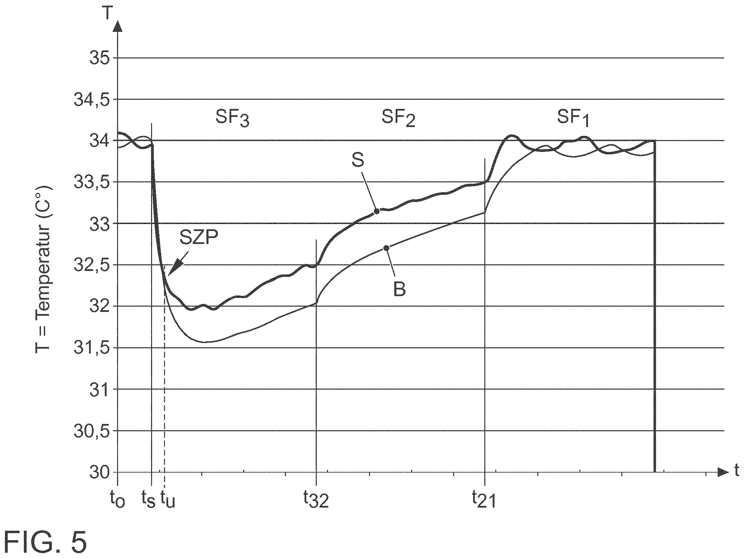

Trocknung im Saugbetrieb S effektiver:
Gemäß den Figuren 1 bis 3 wird verdeutlicht, dass die Trocknung bis zum Umschaltzeitpunkt tu im Kontaktbereich (vergleiche Figuren 1 bis 3) im Saugbetrieb S (Kennlinie S) wirksamer ist als im Ausblasbetrieb B, jedoch wird gemäß Figur 5 verdeutlicht, dass ein Kühleffekt im Kontaktbereich während des Ausblasbetriebs B (Kennlinie B) durch das Ausblasen der Luft stärker ist als im Saugbetrieb S.

In Abhängigkeit der stufenweise Verringerung des Volumenstromes Vₙ (V₃ > V₂ > V₁) gemäß den in Figur 5 dargestellten Belüftungsstufen SF₃, SF₂, SF, (n = 3) des Lüfters, ist im Ausblasbetrieb gemäß der gemittelten Kennlinie B gegenüber dem Saugbetrieb gemäß der gemittelten Kennlinie S die Kühlung effektiver.

Spotwirkung und negatives Zugluftempfinden im Saugbetrieb S geringer als im Ausblasbetrieb B:
Ein weiterer Aspekt hinsichtlich des Komforts zu beachtender Effekt bei der Ausgestaltung des Sitzbelüftungssystems besteht darin, dass im Ausblasbetrieb B im Vergleich zum Saugbetrieb S eine höhere Gefahr für Zugluftempfinden vorliegt, da im Kontaktbereich des aufsitzenden Insassen durch die ausblasende Strömung an den Belüftungsöffnungen eine Spotwirkung entstehen kann.

Spotwirkung und negatives Zugluftempfinden im Ausblasbetrieb B bei geringen Volumenströmen geringer:
Es tritt ferner erfindungsgemäß der Effekt auf, dass bei der Umschaltung U; S---->B vom Saugbetrieb gemäß der gemittelten und spezifischen Kennlinie SB12, SB14 zum Ausblasbetrieb gemäß den gemittelten und spezifischen Kennlinien SB12, SB14 eine solche unerwünschte Spotwirkung erheblich verringert wird, da bei hohen Feuchtigkeitswerten, insbesondere Feuchtigkeitsgrenzwert m > 15 g/kg, bei denen eine hohe Lüfterleistung gefahren wird, die saugende weniger Zugempfinden auslösende Fahrweise benutzt wird. Mit anderen Worten, eine zuerst saugende Betriebsweise mit hoher Lüfterleistung, an die sich in vorteilhafter Weise eine ausblasende Betriebsweise mit geringerer Lüfterleistung anschließt, reduziert die Gefahr einer unerwünschten Spotwirkung im Kontaktbereich.

Nachfolgend wird das Entscheidungs-Flussdiagramms gemäß Figur 7 in Verbindung mit den Figuren 8 und 9 erläutert, wobei mithilfe des Entscheidungs-Flussdiagramms automatisiert ein erweiterter Betriebsmodus festgelegt wird, der unter Berücksichtigung mindestens eines der folgenden Entscheidungskriterien a) bis d) ausgewählt wird.

Die Entscheidungskriterien sind
a) die Abweichung des Ist-Feuchtigkeitsmesswertes von dem Soll-Feuchtigkeitsgrenzwert (Wohlfühlkontaktfeuchte) und
b) die Abweichung des Ist-Temperaturmesswertes von dem Soll-Temperaturgrenzwert (Wohlfühlkontakttemperatur) und
c) das tendenzielle Feuchteverhalten und
d) das tendenzielle Temperaturverhalten.

In Abhängigkeit des mindestens einen Entscheidungskriteriums a) bis d) wird mindestens eine Auswahlentscheidung e) bis g), insbesondere
e) die Zuschaltung des Sitzbelüftungssystems im Saugbetrieb S oder im Ausblasbetrieb B in Abhängigkeit mindestens eines der Kriterien a) bis d) und
f) die Umschaltung im Umschaltbetrieb SB in Abhängigkeit des gewählten Saugbetriebs S gemäß dem Kriterium e) und
g) die Zuschaltung der Sitzheizung in Abhängigkeit der Kriterien b) und/oder d)
getroffen.

Gemäß dem Statusrechteck 22 ist analog zu der Figur 6 die Regelung eines Klimatisierungssystems, umfassend das Sitzbelüftungssystem und das Sitzheizungssystem aktiv und die Funktionen können entsprechend der Entscheidungsrechtecken 23, 25, 27, 29 in einen zugeschalteten oder ausgeschalteten Status versetzt (geschaltet) werden. Gemäß dem Statusrechteck 22 ist wiederum analog zu Figur 6 das Klimatisierungssystem und somit das Sitzbelüftungssystem und das Sitzheizungssystem aktiv und der aufsitzende Insasse sitzt auf dem Fahrzeugsitz, sodass mindestens ein Ist-Temperaturmesswert und mindestens ein Ist-Feuchtemesswert in dem mindestens einen Kontaktbereich des Sitzteils 12 und/oder der Rückenlehne 14 ermittelt werden kann. Sitzteil 12 und/oder Rückenlehne 14 sind entsprechend mit dem Sitzbelüftungssystem und dem Sitzheizungssystem ausgestattet.

Wird entsprechend dem ersten Entscheidungsrechteck 23 in Figur 7 mittels dem polsterseitigen Temperatursensor im jeweiligen Kontaktbereich ein stabiler Temperaturmesswert von größer oder gleich > 31 °C und mittels dem polsterseitigen Feuchtesensor ein stabiler absoluter Feuchtemesswert unter dem absoluten Feuchtegrenzwert von < 15 g/kg festgestellt, liegen in dem/den Kontaktbereich/en optimale Bedingungen vor, sodass analog zu der Figur 6 gemäß Statusrechteck 24 keine Aktivierung einer Heizfläche der Sitzheizung und keine Aktivierung des Sitzbelüftungssystems erfolgt. Es liegt bereits eine "komfortoptimierte Betriebsweise" vor.

In Figur 7 sind jetzt die Entscheidungsrechtecke 25 und 27, sowie 27 und 29 miteinander verknüpft und führen gemäß den Figuren 8 und 9 zu der "erweiterten komfortoptimierten Betriebsweise", wie nachfolgend anhand der Figuren 8 und 9 erläutert wird.

In Figur 8 sind die Status- und Auswahlrechtecke 81, 82, 83, 84, 85 dargestellt, die sich in Abhängigkeit der Entscheidungskriterien a) bis d) bei einem Ist-Feuchtegrenzwert < 15 g/kg ergeben, das heißt die Soll-Wohlfühlkontaktfeuchte F (noch) nicht erreicht wird.

Erfindungsgemäß ist die Vorgabe eines Temperaturgrenzbereichs vorgesehen. Es wird eine vorgebbare maximale Temperatur Tₘₐₓ für den Kontaktbereich eingestellt, die größer als die Wohlfühltemperatur von 31 °C ist, die im Ausführungsbeispiel insbesondere 33 °C beträgt.

Der vorgebbare Temperaturgrenzbereich beträgt somit ΔT = 2K zwischen 31 °C und 33 °C.

Wird entsprechend dem Status- und Auswahlrechteck 81 mittels dem polsterseitigen Temperatursensor im jeweiligen Kontaktbereich ein Ist-Temperaturmesswert oberhalb der von der maximalen Temperatur Tₘₐₓ des Temperaturgrenzwertes von 33 °C festgestellt und ist der Ist-Feuchtigkeitsmesswert, der mittels dem polsterseitigen Feuchtesensor im jeweiligen Kontaktbereich ermittelt wird, kleiner dem vorgebbaren < 15 g/kg Feuchtigkeitsgrenzwert, wird keine Sitzheizung benötigt und das Sitzbelüftungssystem wird auf den Modus Ausblasbetrieb B (Vorrang Kühlung) eingestellt, wie anhand des Status- und Auswahlrechteckes 81 verdeutlicht wird.

Da der Ist-Feuchtigkeitsmesswert kleiner dem vorgebbaren Feuchtegrenzwert < 15 g/kg ist, kann ein Vorrang der Trocknung des Kontaktbereichs zugunsten der Kühlung des Kontaktbereichs aufgegeben werden, weshalb automatisch der Betriebsmodus Ausblasbetrieb B (Vorrang Kühlung) gewählt und zugeschaltet wird.

Wie erläutert, liegt im Ausblasbetrieb B (Vorrang Kühlung) im Vergleich zum Saugbetrieb S (Vorrang Trocknung) eine höhere Gefahr für Zugluftempfinden vor, da im Kontaktbereich des aufsitzenden Insassen durch die ausblasende Strömung an den Belüftungsöffnungen eine Spotwirkung entstehen kann. Es wurde jedoch festgestellt, dass dann, wenn der Ist-Temperaturmesswert oberhalb der maximalen Temperatur Tₘₐₓ des Temperaturgrenzwertes von 33 °C liegt, ein unangenehmes Zugluftempfinden aufgrund der hohen Temperatur T > 33 °C, die insbesondere oberhalb der maximalen Temperatur Tₘₐₓ von 33 °C liegt, nicht auftritt und somit vernachlässigt werden kann.

Wird entsprechend der Status- und Auswahlrechtecke 82 und 83 mittels dem polsterseitigen Temperatursensor im jeweiligen Kontaktbereich ein Ist-Temperaturmesswert im Temperaturgrenzbereich konstant oder fallend zwischen 31 °C und 33 °C gemessen, so wird bei einem mittels dem Feuchtesensor im jeweiligen Kontaktbereich ermittelten Ist-Feuchtemesswert von < 15 g/kg des Soll-Feuchtigkeitsgrenzwertes in Abhängigkeit der Tendenz des Anstiegs der Feuchte nach oben entschieden, ob der der Saugbetrieb S (Vorrang Trocknung) gemäß dem Status- und Auswahlrechteck 82 oder der Ausblasbetrieb B (Vorrang Kühlung) gemäß dem Status- und Auswahlrechteck 83 gewählt wird.

Bei einer starken Tendenz des Feuchtewertes nach oben wird, gemäß dem Status- und Auswahlrechteck 82, der Saugbetrieb S (Vorrang Trocknung) mit einer hohen Drehzahl, das heißt mit einer hohen Belüftungsstufe SFₙ; n = 3 (vergleiche Figur 2), gewählt. Da der Ist-Temperaturmesswert in einem Fall relativ konstant ist und konstant oberhalb des Soll-Temperaturgrenzwertes von 31 °C liegt, wird das Sitzheizungssystem nicht benötigt und somit nicht zugeschaltet.

Bei einer starken Tendenz des Ist-Feuchtewertes nach oben wird, gemäß dem Status- und Auswahlrechteck 82, der Saugbetrieb S (Vorrang Trocknung) mit einer hohen Drehzahl, das heißt mit einer hohen Belüftungsstufe SFₙ; n = 3 (vergleiche Figur 2), gewählt. Da der Ist-Temperaturmesswert in einem anderen Fall stark fallend ist und nach kurzer Zeit gegebenenfalls nicht mehr oberhalb des Soll-Temperaturgrenzwertes von 31 °C liegt, wird das Sitzheizungssystem benötigt und somit bereits parallel zugeschaltet.

Bei einer schwachen Tendenz des Ist-Feuchtewertes nach oben wird, gemäß dem Status- und Auswahlrechteck 83, der Ausblasbetrieb B (Vorrang Kühlung) bei einer geringeren Drehzahl, das heißt mit einer geringen Belüftungsstufe SFₙ; n = 2 oder n = 1 (vergleiche Figur 2), gewählt. Da der Ist-Temperaturmesswert in einem Fall relativ konstant ist und konstant oberhalb des Soll-Temperaturgrenzwertes von 31 °C liegt, wird das Sitzheizungssystem nicht benötigt und somit nicht zugeschaltet.

Bei einer schwachen Tendenz des Ist-Feuchtewertes nach oben wird, gemäß dem Status- und Auswahlrechteck 83, der Ausblasbetrieb B (Vorrang Kühlung) bei einer geringeren Drehzahl, das heißt mit einer geringen Belüftungsstufe SFₙ; n = 2 oder n = 1 (vergleiche Figur 2), gewählt. Da der Ist-Temperaturmesswert in dem anderen Fall stark fallend ist und nach kurzer Zeit gegebenenfalls nicht mehr oberhalb des Soll-Temperaturgrenzwertes von 31 °C liegt, wird die Sitzheizung benötigt und somit bereits zugeschaltet.

Es wird deutlich, dass die Trocknung im Kontaktbereich bei einer schwachen Tendenz des Feuchtewertes nach oben keinen Vorrang mehr hat, sodass automatisch der Ausblasbetrieb B (Vorrang Kühlung) gewählt wird.

Wird entsprechend der Status- und Auswahlrechtecke 84 und 85 mittels dem polsterseitigen Temperatursensor im jeweiligen Kontaktbereich ein Ist-Temperaturmesswert unterhalb des Soll-Temperaturgrenzbereichs von < 31 °C gemessen, so wird bei einem mittels dem Feuchtesensor im jeweiligen Kontaktbereich ermittelten Ist-Feuchtemesswert von < 15 g/kg des Feuchtigkeitsgrenzwertes in Abhängigkeit der Tendenz des Anstieges der Feuchte nach oben entschieden, ob der Saugbetrieb S (Vorrang Trocknung) gemäß dem Status- und Auswahlrechteck 84 oder der Ausblasbetrieb B (Vorrang Kühlung) gemäß dem Status- und Auswahlrechteck 85 gewählt wird.

Bei einer starken Tendenz des Ist-Feuchtewertes nach oben wird, gemäß dem Status- und Auswahlrechteck 84, der Saugbetrieb S mit einer hohen Drehzahl, das heißt mit einer hohen Belüftungsstufe SFₙ; n = 3 (vergleiche Figur 2), gewählt. Da der Ist-Temperaturmesswert unterhalb des Soll-Temperaturgrenzwertes von kleiner < 31 °C liegt, wird die Sitzheizung benötigt und somit zugeschaltet.

Bei einer schwachen Tendenz des Ist-Feuchtewertes nach oben wird, gemäß dem Status- und Auswahlrechteck 85 wird der Ausblasbetrieb B (Vorrang Kühlung) bei einer geringeren Drehzahl, das heißt mit einer geringen Belüftungsstufe SFₙ; n = 2 oder n = 1 (vergleiche Figur 2), gewählt. Da der Ist-Temperaturmesswert unterhalb des Soll-Temperaturgrenzwertes von < 31 °C liegt, wird die Sitzheizung benötigt und somit zugeschaltet.

In diesem Temperaturgrenzbereich soll eine Kühlung, mithin ein Ausblasbetrieb (Vorrang Kühlung) des Kontaktbereichs Vorrang haben. Der Ausblasbetrieb B (Vorrang Kühlung) beziehungsweise die Kühlung wird jedoch nur als Betriebsmodus ausgewählt, wenn der Soll-Temperaturgrenzwert von < 31 °C unterschritten wird und die absolute Feuchte des vorgebbaren Soll-Feuchtegrenzwertes von < 15 g/kg liegt.

In Figur 9 sind die Status- und Auswahlrechtecke 91, 92, 93, 94 dargestellt, die sich in Abhängigkeit der Entscheidungskriterien a) bis d) bei einem Ist-Feuchtegrenzwert > 15 g/kg ergeben, das heißt die Soll-Wohlfühlkontaktfeuchte F ebenfalls (noch) nicht erreicht wird.

Wird entsprechend dem Status- und Auswahlrechteck 91 mittels dem polsterseitigen Temperatursensor im jeweiligen Kontaktbereich ein Ist-Temperaturmesswert oberhalb der maximalen Temperatur Tₘₐₓ des Temperaturgrenzwertes von 33 °C festgestellt und ist der vorgebbare Ist-Feuchtigkeitsmesswert, der mittels dem polsterseitigen Feuchtesensor im jeweiligen Kontaktbereich ermittelt wird, größer dem vorgegebenen Feuchtigkeitsgrenzwert von > 15 g/kg, wird keine Sitzheizung benötigt und das Sitzbelüftungssystem wird jetzt auf den Modus Saugbetrieb S (Vorrang Trocknung) eingestellt, wie anhand des Status- und Auswahlrechteckes 91 verdeutlicht wird. Da der Ist-Feuchtigkeitsmesswert jetzt größer dem vorgebbaren Soll-Feuchtegrenzwert > 15 g/kg ist, kann der Vorrang der Trocknung des Kontaktbereichs gegenüber der Kühlung des Kontaktbereichs beibehalten werden, weshalb automatisch der Betriebsmodus Saugbetrieb S (Vorrang Trocknung) gewählt wird.

Alternativ ist ausgehend von dem Status- und Auswahlrechteck 91 gemäß dem Status- und Auswahlrechtecke 92 vorgesehen, dass der Insasse individuell gegebenenfalls einen Ausblasbetrieb B präferiert.

In diesem Zusammenhang wir darauf verwiesen, dass vorgesehen ist, dass der Insasse jederzeit den vom Insassen selbst voreingestellten Betriebsmodus, der sich durch die Voreinstellung automatisch einstellenden Betriebsmodi S oder B durch ein Auswahlelement innerhalb des Sitzbelüftungssystems überstimmen kann und den anderen Betriebsmodus wählen kann.

Der aufsitzende Insasse kann somit prinzipiell zu jedem Zeitpunkt zwischen einer maximal schnellen Trocknung (Saugbetrieb S) oder einer maximal schnellen Kühlung (Ausblasbetrieb B) im Kontaktbereich wählen. Diese Einflussnahme des Insassen betrifft auch die vom Insassen selbst voreingestellte automatische Zuschaltung der Sitzheizung im jeweiligen Betriebsmodus S oder B durch ein Auswahlelement innerhalb des Sitzheizungssystems, mit dem der Insasse jederzeit individuell die automatische Zuschaltung des Sitzheizungssystems verhindern oder das automatisch zugeschaltete Sitzheizungssystem wieder ausschalten kann.

Erfindungsgemäß ist vorgesehen, wenn der Insasse gemäß dem Status- und Auswahlrechteck 92 einen Ausblasbetrieb B mithin den Vorrang der Kühlung präferiert, dass er in den Ausblasbetrieb B umschaltet, der in dem Fall der hohen Feuchte > 15 g/kg erfindungsgemäß in einer ersten Ausführungsvariante ohne eine Luftkühlung oder einer zweiten Ausführungsvariante mit einer Luftkühlung der Ausausblasluft kombiniert ist. Der Insasse kann diese Ausführungsvarianten in der Voreinstellung wählen oder eine voreingestellte Auswahl der einen oder anderen Ausführungsvariante mittels einem weiteren Auswahlelement innerhalb des Sitzbelüftungssystems umstellen.

Wird entsprechend dem Status- und Auswahlrechteck 93 mittels dem polsterseitigen Temperatursensor im jeweiligen Kontaktbereich ein Ist-Temperaturmesswert im Temperaturgrenzbereich konstant oder fallend zwischen 31 °C und 33 °C gemessen, so wird bei einem mittels dem Feuchtesensor im jeweiligen Kontaktbereich ermittelten Ist-Feuchtemesswert von > 15 g/kg des Soll-Feuchtigkeitsgrenzwertes stets der Saugbetrieb S (Vorrang Trocknung) gewählt. Da der Ist-Temperaturmesswert in einem Fall relativ konstant ist und konstant oberhalb des Temperaturgrenzwertes von 31 °C liegt, wird das Sitzheizungssystem nicht benötigt und somit nicht zugeschaltet. Da der Ist-Temperaturmesswert in dem anderen Fall stark fallend ist und nach kurzer Zeit gegebenenfalls nicht mehr oberhalb des Soll-Temperaturgrenzwertes von 31 °C liegt, wird die Sitzheizung benötigt und somit bereits zugeschaltet.

Wird entsprechend dem Status- und Auswahlrechteck 93 mittels dem polsterseitigen Temperatursensor im jeweiligen Kontaktbereich ein Ist-Temperaturmesswert im Soll-Temperaturgrenzbereich < 31 °C gemessen, so wird bei einem mittels dem Feuchtesensor im jeweiligen Kontaktbereich des ermittelten Ist-Feuchtemesswertes von > 15 g/kg des Soll-Feuchtigkeitsgrenzwertes ebenfalls stets der Saugbetrieb S (Vorrang Trocknung) gewählt. Da der Ist-Temperaturmesswert in diesem Fall schon unterhalb des Soll-Temperaturgrenzwertes von 31 °C relativ konstant ist und konstant oberhalb des Soll-Temperaturgrenzwertes von 31 °C liegt, wird in jedem Fall die Sitzheizung benötigt und entsprechend zugeschaltet.

Gemäß der Erfindung ist vorzugsweise vorgesehen, dass dann, wenn die Auswahl des Betriebsmodus des Sitzbelüftungssystems für eine möglichst schnelle Trocknung mit dem Sitzbelüftungssystem im Saugbetrieb S sorgt, stets gemäß der vorrangegangenen Beschreibung die erfindungsgemäße Umschaltung U; S→B erfolgt, wodurch eine weitere schnelle Trocknung des Kontaktbereichs erreicht wird, die gemäß der erfindungsgemäßen Offsetwert-Regelung zum Umschaltzeitpunkt keinen negativen Effekt auf das Empfinden des aufsitzenden Insassen mehr aufweist.

Zusammengefasst ist erfindungsgemäß vorgesehen, dass bei geringen Ist-Feuchtigkeitsmesswerten, insbesondere bei einem Mischungsverhältnis von m < 15 g/kg automatisch der Ausblasbetrieb B (Vorrang Kühlung) als Betriebsmodus eingesetzt wird, es sei denn, die Feuchte F weist bereits eine stark steigende Tendenz auf, wie gemäß dem Statusund Auswahlrechteck 82 beschrieben. Bei einer stark steigenden Tendenz der Feuchte F wird vorzugsweise bereits der Saugbetrieb S (Vorrang Trocknung) gewählt.

Ferner ist zusammengefasst erfindungsgemäß vorgesehen, dass immer dann, wenn zu Beginn einer Fahrt hohe Werte (Mischungsverhältnis m von Wasserdampf zu trockener Luft größer m > 15 g/kg der absoluten Feuchte) im Kontaktbereich > 15 g/kg festgestellt werden, als Betriebsmodus zunächst der Saugbetrieb S mit einem Umschaltbetrieb, mit der beschriebenen erfindungsgemäßen Umschaltung U; S---->B vom Saugbetrieb S (Vorrang Trocknung) in den Ausblasbetrieb B gewählt wird.

Ferner ist zusammengefasst erfindungsgemäß vorgesehen, dass durch Überwachung des Temperaturgrenzbereichs, insbesondere zwischen den vorgebbaren Temperaturwerten 31 °C bis 33 °C und auch oberhalb des Temperaturgrenzbereichs keine aktive Sitzheizung notwendig ist, es sei denn, die Tendenz des erfassten Temperaturmesswertes ist stark fallend, wie zunächst in den Status- und Auswahlrechtecken 82, 83 und 93 dargestellt und beschrieben.

Ferner ist zusammengefasst erfindungsgemäß vorgesehen, dass durch Überwachung des Temperaturgrenzbereichs, insbesondere wenn der obere Grenzwert > 33 °C des Temperaturgrenzbereichs erreicht oder überschritten wird, die Kühlung mittels dem Ausblasbetrieb (Vorrang Kühlung) als automatischer Betriebsmodus B gewählt wird, insofern der Ist-Feuchtemesswert unterhalb des Soll-Feuchtigkeitsgrenzwertes < 15 g/kg liegt, da ansonsten die Trocknung des Kontaktbereichs Vorrang hat, weshalb dann automatisch vorzugsweise der Betriebsmodus Saugbetrieb S gewählt wird.

Ergänzend ist vorgesehen, da die Kühlung des Kontaktbereichs bei einem ausblasenden Sitzbelüftungssystem stärker ist, eine Vorkühlung der Sitzoberfläche vorzusehen, bevor eine Person in den Wagen einsteigt. Vorgesehen ist, dass das Fahrzeug erkennt, dass eine Person auf dem Weg zum Fahrzeug ist. Die Erkennung erfolgt beispielsweise über ein System zur Vorklimatisierung, wie es in der Druckschrift DE 10 2014 219 408 A1 der Anmelderin beschrieben ist, deren Inhalt hiermit in diese Anmeldung aufgenommen wird.

Es wird beispielsweise ein Ziel-Komfortzustand vorbestimmt, der beispielsweise die Wohlfühlkontakttemperatur, insbesondere 31 °C sein kann. Bei der Vorklimatisierung eines Ziel-Komfortzustandes wird das Kriterium, dass eine Person auf dem Fahrzeugsitz aufsitzt, nicht für die Aktivierung des Klimatisierungssystems und somit des Sitzbelüftungssystems und der Sitzheizung abgefragt.

Möchte eine Person beispielsweise in 30 Minuten einsteigen, wird der Vorrang der Trocknung des Kontaktbereichs zugunsten der Kühlung des Kontaktbereichs aufgegeben, weshalb automatisch der Betriebsmodus Ausblasbetrieb B (Vorrang Kühlung) gewählt wird. Das Sitzbelüftungssystem ist beziehungsweise bleibt im Ausblasbetrieb B (Vorrang Kühlung), bis die Soll-Wohlfühlkontakttemperatur, insbesondere 31 °C, erreicht ist. Bei einem Sitzbelüftungssystem ist das ausblasende Sitzbelüftungssystem für eine Vorklimatisierung effektiver, da die Ansaugorte für die Sitzlüfter zumeist in den unteren Fahrzeugkabinenbereichen eines Fahrzeuges angeordnet sind, in denen Luft in der Fahrzeugkabine kühler ist als in den oberen Bereichen der Fahrzeugkabinenbereichen, weshalb sich ebenfalls der Betriebsmodus Ausblasbetrieb B (Vorrang Kühlung) anbietet.

Nach dem Einstieg des Insassen wird die vollautomatische Regelung der Sitzbelüftung und der Sitzheizung zugeschaltet, da der Insasse jetzt auf dem Fahrzeugsitz sitzt, sodass die aktuellen Ist-Feuchtemesswerte und Ist-Temperaturmesswerte vorliegen, sodass nach den Erläuterungen gemäß dem Regel-Flussdiagramm gemäß Figur 6 oder Figur 7 in Verbindung mit den Figuren 8 und 9 vorgegangen wird.

Schließlich ist vorgesehen, dass die individuelle optimale Soll-Wohlfühlkontakttemperatur und die Soll-Wohlfühlkontaktfeuchte vom Insassen personalisiert einstellbar ist. Mindestens diese genannten Werte werden in einem personalisierten Klimaprofil in einer zugehörigen Steuer- und Regeleinrichtung hinterlegt. Dadurch kann das sogenannte Komfortniveau für die Regelung individuell "wärmer" oder "kälter" abgestimmt werden.

Analog dazu werden der Feuchtegrenzbereich und der Temperaturgrenzbereich des Sitzbelüftungssystems und/oder die Sitzheizung vom Fahrzeuginsassen individuell als einstellbar vorgesehen, sodass auch diese Werte in einem personalisierten Klimaprofil hinterlegt werden können.

Der Insasse kann somit individuell den Soll-Feuchtegrenzwert beispielsweise 15 g/kg innerhalb eines vorgegebenen Feuchtegrenzbereichs, beispielsweise zwischen 12 g/kg und 17 g/kg auswählen.

Der Insasse kann somit individuell den Soll-Temperaturgrenzwert beispielsweise 31 °C innerhalb eines vorgegebenen Temperaturgrenzbereichs, beispielsweise nicht wie beschrieben zwischen 29 °C und 33 °C oder zwischen 25 °C und 35 °C usw., auswählen.

Der Insasse kann beispielsweise auch die maximale Temperatur Tₘₐₓ für den Temperaturgrenzbereich auswählen. Die Wohlfühlkontakttemperatur beträgt beispielsweise nicht wie erläutert 31 °C, sondern 32 °C. Er kann auch individuell eine andere Wohlfühltemperatur wählen und den Temperaturgrenzbereich für den Kontaktbereich einstellen, der beispielsweise nicht zwischen 31 °C und 33 °C, sondern nach entsprechender Auswahl zwischen 32 °C und 34 °C (ΔT = 2K), liegt.

### Bezugszeichenliste

- 12: Sitzteil
- 16: Rückenlehne

### Regelstrategie in einer komfortoptimierten Betriebsweise

- 22: Statusrechteck
- 23: Entscheidungsrechteck
- 24: Statusrechteck
- 25: Entscheidungsrechteck
- 26: Statusrechteck
- 27: Entscheidungsrechteck
- 28: Statusrechteck
- 29: Entscheidungsrechteck

### Regelstrategie in einer erweiterten komfortoptimierten Betriebsweise

- 22: Statusrechteck
- 81: Status- und Auswahlrechteck
- 82: Status- und Auswahlrechteck
- 83: Status- und Auswahlrechteck
- 84: Status- und Auswahlrechteck
- 85: Status- und Auswahlrechteck
- 91: Status- und Auswahlrechteck
- 92: Status- und Auswahlrechteck
- 93: Status- und Auswahlrechtecke
- 94: Status- und Auswahlrechtecke
- Tₘₐₓ: maximale Temperatur im Kontaktbereich
- Vₙ: Volumenstrom (u= 1, 2, 3)
- SFₙ: Belüftungsstufen/ Lüftungsstufen (n = 1, 2, 3)
- S: Kennlinie-Saugbetrieb
- B: Kennlinie-Ausblasbetrieb
- SZP: Sättigungszeitpunkt
- t: Zeit
- T: Temperatur
- F: Feuchte
- U: Umschaltung
- SB: Umschaltbetrieb des Sitzteils mit spezifischer Kennlinie
- SB12: Umschaltung Saugbetrieb S auf Ausblasbetrieb B
- SB14: spezifische Kennlinie der Rückenlehne mit Umschaltung U Saugbetrieb S auf Ausblasbetrieb B
- m: Mischungsverhältnis Gewicht von Wasserdampf in 1kg trockene Luft
- Δm: Offset
- t₀: Nullzeitpunkt
- t_{S}: Startzeitpunkt
- t_{U}: Umschaltzeitpunkt
- t₃₂: Zeitpunkt Umschaltung Belüftungsstufen
- t₂₁: Zeitpunkt Umschaltung Belüftungsstufen

## Patentansprüche

1. Verfahren zur Klimatisierung eines mit einer Person besetzten Fahrzeugsitzes, der mindestens ein Sitzbelüftungssystem umfasst, wobei in einem Sitzteil und/oder einem Rückenlehnenteil des Fahrzeugsitzes mindestens ein Feuchte-Sensor als Feuchte-Istwertgeber für die absolute Luftfeuchte innerhalb des Polsterteils des mindestens einen Sitzteils und/oder Rückenlehnenteils angeordnet ist, sodass mittels einer Steuerund Regeleinrichtung durch Zuschaltung des Sitzbelüftungssystems ein Ziel-Komfortzustand einer auf dem Fahrzeugsitz aufsitzenden Person bewirkbar ist, wobei der Ziel-Komfortzustand in Abhängigkeit mindestens eines den erfassten Ist-Feuchtemesswert auswertenden Regelalgorithmus durch Variation der Luftströmung des Sitzbelüftungssystems ein vorgebbarer Soll-Feuchtgrenzwert einregelbar ist,
**dadurch gekennzeichnet, dass**
das mindestens eine Sitzbelüftungssystem in Abhängigkeit des mindestens einen, in mindestens einem Kontaktbereich zwischen Polsteroberfläche und Hautoberfläche der Person angeordneten Feuchte-Sensors als Feuchte-Istwertgeber mindestens einen repräsentativen Ist-Feuchtemesswert als Kontaktfeuchte im Kontaktbereich erfasst, der von dem vorgebbaren Soll-Feuchtegrenzwert abweicht, sodass in Abhängigkeit einer Regelabweichung entweder in einem Saugbetrieb (S) oder in einem Ausblasbetrieb (B) angefahren und auf den vorgegebenen Soll-Feuchtegrenzwert ausgeregelt wird, wobei in dem Saugbetrieb (S) in Abhängigkeit des Erreichens eines Sättigungszeitpunktes (SZP), in dem eine maximal mögliche absolute Luftfeuchtigkeit erreicht ist, eine Umschaltung (U) in den Ausblasbetrieb (B) vorgenommen wird.

2. Verfahren nach Anspruch 1, **dadurch gekennzeichnet, dass** der Fahrzeugsitz zudem mindestens ein Sitzheizungssystem umfasst, wobei in einem Sitzteil und/oder einem Rückenlehnenteil des Fahrzeugsitzes mindestens ein Temperatur-Sensor als Temperatur-Istwertgeber für die Temperatur innerhalb des Polsterteils des mindestens einen Sitzteils und/oder Rückenlehnenteils angeordnet ist, sodass mittels einer Steuerund Regeleinrichtung durch Zuschaltung des Sitzheizungssystems ein Ziel-Komfortzustand einer auf dem Fahrzeugsitz aufsitzenden Person bewirkbar ist, wobei der Ziel-Komfortzustand in Abhängigkeit mindestens eines, den Ist-TemperaturMesswert auswertenden Regelalgorithmus durch Variation der Heizleistung des Sitzheizungssystems ein vorgebbarer Soll-Temperaturgrenzwert eingeregelt wird, wobei das mindestens eine Sitzheizungssystem in Abhängigkeit des mindestens einen, in mindestens einem Kontaktbereich zwischen Polsteroberfläche und Hautoberfläche der Person angeordneten Temperatur-Sensors als Temperatur-Istwertgeber mindestens einen repräsentativen Ist-Temperaturmesswert als Kontakttemperatur im Kontaktbereich erfasst, der von dem vorgebbaren Soll-Temperaturgrenzwert abweicht.

3. Verfahren nach Anspruch 1 oder 2, **dadurch gekennzeichnet, dass** der einregelbare Soll-Feuchtegrenzwert und der einregelbare Soll-Temperaturgrenzwert in dem mindestens einen Kontaktbereich individuell einstellbar sind, wobei der Soll-Feuchtegrenzwert einer Wohlfühlkontaktfeuchte, insbesondere 15 g/kg des Gewichts des Wasserdampfes in g, in 1 kg trockener Luft und der Soll-Temperaturgrenzwert, insbesondere 31 °C einer Wohlfühltemperaturfeuchte im Kontaktbereich entspricht.

4. Verfahren nach Anspruch 3, **dadurch gekennzeichnet, dass** der einregelbare Soll-Feuchtegrenzwert und der einregelbare Soll-Temperaturgrenzwert innerhalb des Regelalgorithmus Grenzwerte von individuell einstellbaren Feuchtegrenzbereichen und Temperaturgrenzbereichen sind.

5. Verfahren nach Anspruch 1, **dadurch gekennzeichnet, dass** in dem Regelalgorithmus eine Regelgröße aufgeschaltet ist, die bei einem kurzzeitigen Anstieg des Ist-Feuchtemesswertes bei der Umschaltung U; S→B vom Saug- in den Ausblasbetrieb dafür sorgt, dass der Ist-Feuchtemesswert stets unterhalb des vorgegebenen Soll-Feuchtigkeitsgrenzwertes, insbesondere unterhalb von 15 g/kg bleibt.

6. Verfahren nach Anspruch 4 und/oder 5, **dadurch gekennzeichnet, dass** in dem Regelalgorithmus im Saugbetrieb (S) durch die Erfassung des Ist-Feuchtigkeitsmesswertes in dem mindestens einen Kontaktbereich und durch Vorgabe eines negativen Offsets von insbesondere mindestens Δm 0,5 - 2,0 gegenüber dem vorgegebenen Soll-Feuchtigkeitsgrenzwert in Abhängigkeit des Erreichens des Sättigungszeitpunktes (SZP) ein spätester Umschaltzeitpunkt (t_{U}) ermittelt wird, sodass die Umschaltung (U) zum Umschaltzeitpunkt (t_{U}) durch Vorgabe des negativen Offsets unterhalb des vorgegebenen Soll-Feuchtigkeitsgrenzwertes stets eine Überschreitung des vorgegebenen Soll-Feuchtigkeitsgrenzwertes verhindert.

7. Verfahren nach Anspruch 1 und/oder 2, **dadurch gekennzeichnet, dass** das Sitzbelüftungssystem und/oder das Sitzheizungssystem über den Regelalgorithmus in Abhängigkeit mindestens eines der Entscheidungskriterien
a) einer die Abweichung des Ist-Feuchtigkeitsmesswertes von dem Soll-Feuchtigkeitsgrenzwert (Wohlfühlkontaktfeuchte) und
b) einer Abweichung des Ist-Temperaturmesswertes von dem Ist-Temperaturgrenzwert (Wohlfühlkontakttemperatur) und
c) des tendenziellen Feuchteverhaltens und
d) des tendenziellen Temperaturverhalten im Saugbetrieb (S) oder im Ausblasbetrieb (B)
angefahren wird.

8. Verfahren nach Anspruch 7, **dadurch gekennzeichnet, dass** in Abhängigkeit des mindestens einen Entscheidungskriteriums a) bis d) mindestens eine Auswahlentscheidung e) bis g)
e) die Zuschaltung des Sitzbelüftungssystems im Saugbetrieb S oder im Ausblasbetrieb B in Abhängigkeit mindestens eines der Kriterien a) bis d) und
f) die Umschaltung im Umschaltbetrieb SB in Abhängigkeit des gewählten Saugbetriebs S gemäß dem Kriterium e) und
g) die Zuschaltung der Sitzheizung in Abhängigkeit der Kriterien b) und/oder d) getroffen wird.

9. Verfahren nach Anspruch 1 oder 2, **dadurch gekennzeichnet, dass** innerhalb des Regelalgorithmus eine Vorklimatisierung des Ziel-Komfortzustandes ausführbar ist, wobei der Insasse nicht auf dem Fahrzeugsitz aufsitzt, sodass für die Aktivierung des Klimatisierungssystems und die Zuschaltung des Sitzbelüftungssystems und/oder des Sitzheizungssystems gemäß den Ansprüchen 1 bis 8 das Kriterium, dass sich die Person in der Nähe des mit dem erfindungsgemäßen ausgestattete Fahrzeuges befindet, auslösend ist.

10. Klimatisierungssystem umfassend mindestens ein Sitzbelüftungssystem und ein Sitzheizungssystem, wobei in einem Sitzteil und/oder einem Rückenlehnenteil des Fahrzeugsitzes mindestens ein Feuchte-Sensor als Feuchte-Istwertgeber für die absolute Luftfeuchte innerhalb des Polsterteils des mindestens einen Sitzteils und/oder Rückenlehnenteils angeordnet ist, ferner umfassend mindestens eine Steuer- und Regeleinrichtung zur Zuschaltung des Sitzbelüftungssystems in einen Ziel-Komfortzustand einer auf dem Fahrzeugsitz aufsitzenden Person, wobei das mindestens eine Sitzbelüftungssystems mindestens einen, in mindestens einem Kontaktbereich zwischen Polsteroberfläche und Hautoberfläche der Person angeordneten FeuchteSensor als Feuchte-Istwertgeber aufweist, **dadurch gekennzeichnet, dass** das Sitzheizungssystem in dem Sitzteil und/oder dem Rückenlehnenteil des Fahrzeugsitzes zudem mindestens ein Temperatur-Sensor als Temperatur-Istwertgeber zur Erfassung der Temperatur eines Kontaktbereichs des Polsterteils des mindestens einen Sitzteils und/oder Rückenlehnenteils angeordnet ist, sodass mittels der Steuerund Regeleinrichtung durch Zuschaltung des Sitzheizungssystems ein Ziel-Komfortzustand der auf dem Fahrzeugsitz aufsitzenden Person bewirkbar ist, wobei das mindestens eine Sitzheizungssystem mindestens einen, in mindestens einem Kontaktbereich zwischen Polsteroberfläche und Hautoberfläche der Person angeordneten Temperatur-Sensor als Temperatur-Istwertgeber aufweist.

11. Klimatisierungssystem nach Anspruch 10, eingerichtet, um das erfindungsgemäße Verfahren zur Klimatisierung eines mit einer Person besetzten Fahrzeugsitzes gemäß den Ansprüchen 1 bis 9 auszuführen, wobei das Klimatisierungssystem zu diesem Zweck eine Steuer- und Regeleinrichtung umfasst, in der ein computerlesbarer Programmalgorithmus zur Ausführung des Verfahrens und gegebenenfalls erforderliche Kennfelder gespeichert sind.

## Claims

1. Method for air conditioning a vehicle seat which is occupied by a person and comprises at least one seat ventilation system, wherein at least one humidity sensor is arranged in a seat part and/or a backrest part of the vehicle seat as an actual humidity value transmitter for the absolute air humidity within the cushion part of the at least one seat part and/or backrest part, so that a target state of comfort for a person sitting on the vehicle seat can be brought about by means of an open-loop and closed-loop control device by switching on the seat ventilation system, wherein the target state of comfort can be adjusted to a specifiable target humidity limit value by variation of the air flow of the seat ventilation system in dependence on at least one control algorithm that evaluates the detected actual measured humidity value,
**characterized in that**,
in dependence on the at least one humidity sensor arranged in at least one contact region between a cushion surface and a skin surface of the person as an actual humidity value transmitter, the at least one seat ventilation system detects at least one representative actual measured humidity value as a contact humidity in the contact region that deviates from the specifiable target humidity limit value, so that, in dependence on a system deviation, operation is started either in a suction mode (S) or in a blow-out mode (B) and is corrected to the specified target humidity limit value, wherein, in the suction mode (S), a switching over (U) into the blow-out mode (B) is performed in dependence on reaching a saturation time (SZP) at which a maximum possible absolute air humidity is reached.

2. Method according to Claim 1, **characterized in that** the vehicle seat additionally comprises at least one seat heating system, wherein at least one temperature sensor is arranged in a seat part and/or a backrest part of the vehicle seat as an actual temperature value transmitter for the temperature within the cushion part of the at least one seat part and/or backrest part, so that a target state of comfort for a person sitting on the vehicle seat can be brought about by means of an open-loop and closed-loop control device by switching on the seat heating system, wherein the target state of comfort is adjusted to a specifiable target temperature limit value by variation of the heat output of the seat heating system in dependence on at least one control algorithm that evaluates the actual measured temperature value, wherein, in dependence on the at least one temperature sensor arranged in at least one contact region between a cushion surface and a skin surface of the person as an actual temperature value transmitter, the at least one seat heating system detects at least one representative actual measured temperature value as a contact temperature in the contact region that deviates from the specifiable target temperature limit value.

3. Method according to Claim 1 or 2, **characterized in that** the adjustable target humidity limit value and the adjustable target temperature limit value in the at least one contact region can be set individually, wherein the target humidity limit value corresponds to a contact humidity for comfort, in particular 15 g/kg of the weight of the water vapour in g, in 1 kg of dry air, and the target temperature limit value, in particular 31°C, corresponds to a temperature humidity for comfort in the contact region.

4. Method according to Claim 3, **characterized in that** the adjustable target humidity limit value and the adjustable target temperature limit value within the control algorithm are limit values of individually settable humidity limit ranges and temperature limit ranges.

5. Method according to Claim 1, **characterized in that** a controlled variable which ensures that the actual measured humidity value always remains below the specified target humidity limit value, in particular below 15 g/kg, when there is a transient rise in the actual measured humidity value during the switching over U; S→B from the suction mode into the blow-out mode is blended into the control algorithm.

6. Method according to Claim 4 and/or 5, **characterized in that**, in the suction mode (S), a latest switching-over time (t_{U}) is determined in the control algorithm, in dependence on reaching the saturation time (SZP) by the detection of the actual measured humidity value in the at least one contact region and by specification of a negative offset of in particular at least Δm 0.5 - 2.0 with respect to the specified target humidity limit value, so that, as a result of the specification of the negative offset below the specified target humidity limit value, the switching over (U) at the switching-over time (t_{U}) always prevents an exceedance of the specified target humidity limit value.

7. Method according to Claim 1 and/or 2, **characterized in that** the seat ventilation system and/or the seat heating system is started by way of the control algorithm in dependence on at least one of the decision criteria
a) a deviation of the actual measured humidity value from the target humidity limit value (the contact humidity for comfort) and
b) a deviation of the actual measured temperature value from the actual temperature limit value (the contact temperature for comfort) and
c) the trend in the way the humidity behaves and
d) the trend in the way the temperature behaves in the suction mode (S) or in the blow-out mode (B).

8. Method according to Claim 7, **characterized in that**, in dependence on the at least one decision criterion a) to d), at least one selection decision e) to g) is made
e) the switching on of the seat ventilation system in the suction mode S or in the blow-out mode B in dependence on at least one of the criteria a) to d) and
f) the switching over in switching-over mode SB in dependence on the selected suction mode S according to the criterion e), and
g) the switching on of the seat heating in dependence on the criteria b) and/or d).

9. Method according to Claim 1 or 2, **characterized in that** a preconditioning of the target state of comfort can be carried out within the control algorithm, wherein the occupant is not sitting on the vehicle seat, so that the criterion that the person is in the vicinity of the vehicle equipped according to the invention serves as a trigger for the activation of the air conditioning system and the switching on of the seat ventilation system and/or the seat heating system according to Claims 1 to 8.

10. Air conditioning system comprising at least one seat ventilation system and a seat heating system, wherein at least one humidity sensor is arranged in a seat part and/or backrest part of the vehicle seat as an actual humidity value transmitter for the absolute air humidity within the cushion part of the at least one seat part and/or backrest part, also comprising at least one open-loop and closed-loop control device for switching on the seat ventilation system into a target state of comfort for a person sitting on the vehicle seat, wherein the at least one seat ventilation system has at least one humidity sensor arranged in at least one contact region between a cushion surface and a skin surface of the person as an actual humidity value transmitter, **characterized in that** the seat heating system in the seat part and/or the backrest part of the vehicle seat additionally has at least one temperature sensor as an actual temperature value transmitter for detecting the temperature of a contact region of the cushion part of the at least one seat part and/or backrest part, so that a target state of comfort for the person sitting on the vehicle seat can be brought about by means of the open-loop and closed-loop control device by switching on the seat heating system, wherein the at least one seat heating system has at least one temperature sensor arranged in at least one contact region between a cushion surface and a skin surface of the person as an actual temperature value transmitter.

11. Air conditioning system according to Claim 10, set up to carry out the method according to the invention for air conditioning a vehicle seat according to Claims 1 to 9 which is occupied by a person, wherein the air-conditioning system comprises for this purpose an open-loop and closed-loop control device in which a computer-readable program algorithm for carrying out the method and possibly required characteristic maps are stored.

## Revendications

1. Procédé de climatisation d'un siège de véhicule, occupé par une personne, qui comprend au moins un système de ventilation de siège, au moins un capteur d'humidité, qui se présente sous la forme d'un transmetteur de valeur d'humidité réelle pour l'humidité absolue, étant disposé dans une partie de siège et/ou une partie de dossier du siège de véhicule à l'intérieur de la partie de rembourrage de l'au moins une partie de siège et/ou partie de dossier de sorte qu'un état de confort cible d'une personne assise sur le siège de véhicule puisse être atteint au moyen d'un dispositif de commande et de régulation par activation du système de ventilation de siège, l'état de confort cible pouvant être régulé à une valeur limite d'humidité de consigne spécifiable en fonction d'au moins un algorithme de régulation évaluant la valeur de mesure d'humidité réelle détectée par variation du débit d'air du système de ventilation de siège,
**caractérisé en ce que**
l'au moins un système de ventilation de siège détecte, en tant que transmetteur de valeur d'humidité réelle et en fonction de l'au moins un capteur d'humidité disposé dans au moins une zone de contact entre la surface de rembourrage et la surface de peau de la personne, au moins une valeur réelle de mesure d'humidité qui est représentative de l'humidité de contact dans la zone de contact et qui s'écarte de la valeur limite d'humidité cible spécifiable de façon à démarrer, en fonction d'un écart de régulation, soit en mode aspiration (S) soit en mode soufflage (B) et réguler à la valeur limite d'humidité cible spécifiée, une commutation (U) vers le mode soufflage (B) étant effectuée en mode aspiration (S) en fonction d'un instant de saturation (SZP) à atteindre où une humidité absolue maximale possible est atteinte.

2. Procédé selon la revendication 1, **caractérisé en ce que** le siège de véhicule comprend également au moins un système de chauffage de siège, au moins un capteur de température, qui se présente sous la forme d'un transmetteur de valeur de température réelle pour la température à l'intérieur de la partie de rembourrage de l'au moins une partie de siège et/ou partie de dossier, étant disposé dans une partie de siège et/ou une partie de dossier du siège de véhicule de sorte que l'état de confort cible d'une personne assise sur le siège de véhicule puisse être atteint au moyen d'un dispositif de commande et de régulation par activation du système de chauffage de siège, l'état de confort cible étant régulé à une valeur limite de température de consigne spécifiable en fonction d'au moins un algorithme de régulation, qui évalue la valeur de mesure de température réelle, par variation de la puissance calorifique du système de chauffage de siège, l'au moins un système de chauffage de siège détectant, en tant que capteur de valeur de température réelle et en fonction de l'au moins un capteur de température disposé dans au moins une zone de contact entre la surface de rembourrage et la surface de peau de la personne, au moins une valeur de mesure de température réelle qui est représentative de la température de contact dans la zone de contact et qui s'écarte de la valeur limite de température cible spécifiée.

3. Procédé selon la revendication 1 ou 2, **caractérisé en ce que** la valeur limite d'humidité cible régulable et la valeur limite de température cible régulable peuvent être réglées individuellement dans au moins une zone de contact, la valeur limite d'humidité cible correspondant à une humidité de contact de bien-être, notamment 15 g/kg du poids de vapeur d'eau en g, dans 1 kg d'air sec et la valeur limite de température cible, notamment 31 °C, correspondant à une humidité de température de bien-être dans la zone de contact.

4. Procédé selon la revendication 3, **caractérisé en ce que**, dans l'algorithme de régulation, la valeur limite d'humidité de consigne régulable et la valeur limite de température de consigne régulable sont des valeurs limites de plages limites d'humidité et de plages limites de températures réglables individuellement.

5. Procédé selon la revendication 1, **caractérisé en ce que**, dans l'algorithme de régulation, une grandeur de régulation est appliquée qui, en cas de brève augmentation de la valeur de mesure d'humidité réelle lors de la commutation U ; S→B du mode aspiration au mode soufflage, garantit que la valeur de mesure d'humidité réelle reste toujours inférieure à la valeur limite d'humidité cible spécifiée, en particulier inférieure à 15 g/kg.

6. Procédé selon la revendication 4 et/ou 5, **caractérisé en ce que**, dans l'algorithme de régulation en mode aspiration (S), un dernier instant de commutation (t_{U}) est déterminé par détection de la valeur de mesure d'humidité réelle dans l'au moins une zone de contact et par spécification d'un décalage négatif, notamment d'au moins Δm 0,5 - 2,0, par rapport à la valeur limite d'humidité cible spécifiée en fonction de l'instant de saturation (SZP) à atteindre de sorte que la commutation (U) à l'instant de commutation (t_{U}) empêche toujours un dépassement de la valeur limite d'humidité cible spécifiée par spécification du décalage négatif au-dessous de la valeur limite d'humidité cible spécifiée.

7. Procédé selon la revendication 1 et/ou 2, **caractérisé en ce que** le système de ventilation de siège et/ou le système de chauffage de siège est démarré par le biais de l'algorithme de régulation en fonction d'au moins un des critères de décision suivants :
a) l'écart de la valeur de mesure d'humidité réelle par rapport à la valeur limite d'humidité cible (humidité de contact de bien-être) et
b) un écart entre la valeur de mesure de température réelle et la valeur limite de température réelle (température de contact de bien-être) et
c) le comportement en humidité tendanciel et
d) le comportement en température tendanciel en mode aspiration (S) ou en mode soufflage (B).

8. Procédé selon la revendication 7, **caractérisé en ce que**, en fonction de l'au moins un critère de décision a) à d), au moins une décision de sélection e) à g) est prise
e) activation du système de ventilation de siège en mode aspiration S ou en mode soufflage B en fonction d'au moins un des critères a) à d) et
f) commutation en mode de commutation SB en fonction du mode aspiration S sélectionné selon le critère e) et
g) activation du chauffage de siège en fonction des critères b) et/ou d).

9. Procédé selon la revendication 1 ou 2, **caractérisé en ce qu'**une pré-climatisation de l'état de confort cible peut être effectuée à l'intérieur de l'algorithme de régulation, l'occupant n'étant pas assis sur le siège de véhicule de sorte que, pour activer le système de climatisation et activer le système de ventilation de siège et/ou le système de chauffage de siège selon les revendications 1 à 8, le critère selon lequel la personne se trouve dans le voisinage du véhicule équipé selon l'invention est un facteur déclenchant.

10. Système de climatisation comprenant au moins un système de ventilation de siège et un système de chauffage de siège, au moins un capteur d'humidité se présentant sous la forme d'un transmetteur de valeur d'humidité réelle pour l'humidité de l'air absolue étant disposé à l'intérieur de la partie de rembourrage de l'au moins une partie de siège et/ou partie de dossier dans une partie de siège et/ou une partie de dossier du siège de véhicule, ledit système de climatisation comprenant en outre au moins un dispositif de commande et de régulation destiné à activer le système de ventilation de siège dans un état de confort cible d'une personne assise sur le siège de véhicule, l'au moins un système de ventilation de siège comportant au moins un capteur d'humidité se présentant sous la forme d'un transmetteur de valeur d'humidité réelle et disposé dans au moins une zone de contact entre la surface de rembourrage et la surface de peau de la personne, **caractérisé en ce que** le système de chauffage de siège comporte dans la partie de siège et/ou la partie de dossier du siège de véhicule également au moins un capteur de température se présentant sous la forme d'un transmetteur de valeur réelle de température destiné à détecter la température d'une zone de contact de la partie de rembourrage d'au moins une partie de siège et/ou partie de dossier de sorte qu'un état de confort cible de la personne assise sur le siège du véhicule puisse être obtenu au moyen du dispositif de commande et de régulation par activation du système de chauffage de siège, l'au moins un système de chauffage de siège comportant au moins un capteur de température se présentant sous la forme d'un transmetteur de valeur de température réelle et disposé dans au moins une zone de contact entre la surface de rembourrage et la surface de peau de la personne.

11. Système de climatisation selon la revendication 10, conçu pour mettre en œuvre le procédé selon l'invention de climatisation d'un siège de véhicule occupé par une personne selon les revendications 1 à 9, le système de climatisation d'air comprenant pour cela un dispositif de commande et de régulation dans lequel sont mémorisés un algorithme de programme lisible par ordinateur destiné à mettre en œuvre le procédé et d'éventuels diagrammes caractéristiques nécessaires.
